(19) Europäisches Patentamt / European Patent Office / Office européen des brevets

(11) **EP 4 485 064 B1**

(12) **EUROPEAN PATENT SPECIFICATION**

(45) Date of publication and mention
of the grant of the patent:
**01.04.2026 Bulletin 2026/14**

(21) Application number: **23763660.0**

(22) Date of filing: **22.02.2023**

(51) International Patent Classification (IPC):
*H04N 23/55* (2023.01)   *G03B 11/00* (2021.01)
*G02B 27/00* (2006.01)   *H04N 5/913* (2006.01)
*H04N 23/667* (2023.01)   *H04L 9/08* (2006.01)
*G06N 3/08* (2023.01)   *H04N 23/00* (2023.01)
*H04N 23/60* (2023.01)   *H04N 23/80* (2023.01)
*H04N 23/75* (2023.01)   *G06N 3/09* (2023.01)
*H04N 1/44* (2006.01)   *G03B 11/04* (2021.01)
*G03B 17/56* (2021.01)   *G02B 13/00* (2006.01)
*G09C 5/00* (2006.01)

(52) Cooperative Patent Classification (CPC):
**H04N 23/55; G02B 13/0055; G06N 3/08;
G06N 3/09; G09C 5/00; H04N 5/913; H04N 23/667;
H04N 23/75; H04N 23/80;** G02B 27/0081;
G03B 11/043; G03B 17/565; H04N 1/448;
H04N 2005/91364

(86) International application number:
**PCT/KR2023/002507**

(87) International publication number:
**WO 2023/167461 (07.09.2023 Gazette 2023/36)**

(54) **ELECTRONIC DEVICE FOR ENCODING IMAGE**

ELEKTRONISCHE VORRICHTUNG ZUR BILDCODIERUNG

DISPOSITIF ÉLECTRONIQUE POUR CODER UNE IMAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2022 KR 20220026972**

(43) Date of publication of application:
**01.01.2025 Bulletin 2025/01**

(73) Proprietor: **LG Electronics Inc.
Yeongdeungpo-gu
Seoul 07336 (KR)**

(72) Inventors:
• **JEON, Byeongmoon**
**Seoul 06772 (KR)**
• **PARK, Taewoong**
**Seoul 06772 (KR)**
• **LEE, Seunggyu**
**Seoul 06772 (KR)**
• **KIM, Hyunjoon**
**Seoul 06772 (KR)**
• **HONG, Samnyol**
**Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
EP-A1- 4 462 768    CN-A- 111 738 897
KR-A- 20140 101 184    KR-A- 20190 087 215
KR-A- 20210 151 464    KR-A- 20210 151 464
KR-B1- 100 604 585    US-A1- 2010 053 350
US-A1- 2010 177 160

## Description

### Technical Field

The present disclosure relates to a method of encrypting an image. More particularly, the present disclosure relates to a method of encrypting an image in an unidentifiable manner and an electric device capable of performing the method.

### Background Art

The amendments to the data-related laws, which are now in force in the Republic of Korea, require that personal information be made unidentifiable to protect the personal information while still allowing data to be utilized. These amendments aim to promote the utilization of data as a critical resource in the fourth industry revolution. Specifically, the amendments to the three data-related laws, such as the Personal Information Protection Law, have been in force since August 2020 in the Republic of Korea. These amendments aim to promote the use of data as a critical resource in the fourth industry revolution, particularly in the fields of artificial intelligence, cloud computing, IoT, and the like.

The essential provisions of the amendments to the three data-related laws, such as the Personal Information Protection Law, stipulate that the utilization of information be permitted without the owner's consent when personal information is made unidentifiable. These essential provisions aim to protect the personal information while utilizing data. Standards for making personal information unidentifiable have also been established in the U.S.A. and the EU, and the corresponding personal information protection laws are currently enforced.

Regarding a method of rendering this personal information as unidentifiable information, a reception electronic device that receives an image may acquire an original image and then may also encrypt the original image using software. However, when the reception electronic device performs encryption, there arises a problem in that personal information contained in the original image remains vulnerable to hacking risks at the terminal level.

Data associated with personal information may also be utilized as meaningful Big Data through a deep learning model in a shared environment. In association with this, there arises a problem in that the risk of privacy data leakage is present while data associated with personal information is processed for training through the deep learning model in the shared environment.

In association with this, when always exposed to a camera, customers (users) feel psychologically uncomfortable and protect their privacy by actions like covering a camera lens with a mechanical cover. However, these actions may cause the problem of inconvenience. Privacy protection measures that apply to primary PC cameras, monitor cameras, and webcam products, which are available on the market, are merely passive and aimed at alleviating the user's psychological discomfort. These measures include using a mechanical shutter and covering the camera with its cover.

In addition, covering the camera with its cover can protect privacy as constant surveillance and monitoring are fundamental to providing AI functions and services. The legal regulations are strictly enforced regarding unidentifiable personal information when implementing the AI functions. Therefore, the above-mentioned technique of covering the lens of the camera is not fundamental to protecting privacy.

In addition, with advancements in the fourth industry revolution, there arises a problem that more images containing personal information, which are captured without the person's awareness, may be increasingly utilized as Big Data. In addition, the technology according to the present disclosure is important because companies with technologies that render these images unidentifiable may have a competitive advantage. Furthermore, there is a demand for technologies that can prevent the increasingly frequent hacking of IoT devices. US 2010/053350 A1 discloses an imaging device and a method of same, which bypass blurring restoration processing of an image processing device by a switching unit to perform camera signal processing of a camera signal processing unit at the time of a through image and perform blurring restoration processing at the image processing device, then performs camera signal processing at the camera signal processing unit to display the image only at the time of capturing an image. CN 111738897 A discloses a multi-image multi-encryption method based on speckle decorrelation. In the document, it is described that a plurality of original images is encrypted into speckles through an optical system, single-key multi-image encryption is realized by utilizing speckle rotation decorrelation but related properties, multiple encryption is realized by using the properties of speckle scaling decorrelation and speckle decorrelation in a replacement detection area, and multiple images can be encrypted in each encryption level.

### Disclosure of Invention

### Technical Problem

Objects of the present disclosure are to address the above-mentioned problems and other problems. More specifically, one object of the present disclosure is to provide a method of encrypting an image in an unidentifiable manner and an electronic device and an image transmission and reception system that are capable of performing the method.

Another object of the present disclosure is to blur an image using an added optical element and thus to keep a personal image unidentifiable even if utilized for deep learning and similar applications or if hacked.

A further object of the present disclosure is to provide an image having completely the same quality as an image captured by a general camera by switching off and thus removing an added optical element when a unique function of a camera, such as video chatting or remote monitoring, is needed.

Another object of the present disclosure is to output an image that is optically processed in an unidentifiable manner at the camera level so that the image remains unidentifiable even if hacked or if utilized as Big Data for artificial intelligence learning data and similar applications.

Still another object of the present disclosure is to effectively deal with two situations. One situation is when a normal image is needed for video chatting, remote monitoring, or the like. The other situation is when an image processed in an unidentifiable manner is needed because artificial intelligence operates in a general situation.

Yet another object of the present disclosure is to propose a differentiated and competitive technology that is capable of dealing with an environment where hacking of IoT devices is also continuously increasing and, if necessary, of also performing the camera function of a general webcam.

## Solution to Problem

The invention is defined by the appended claims.

## Advantageous Effects of Invention

A method of encrypting an encrypted image in an unidentifiable manner according to the present disclosure and an electronic device and an image transmission and reception system that perform the method is described as follows.

According to the present disclosure, an image is blurred by switching on and thus adding an optical element, which is a new optical component, to a camera lens. As a result, even if utilized for deep learning or similar applications or if hacked, a personal image can remain unidentifiable.

According to the present disclosure, when a unique function of a camera, such as video chatting or remote monitoring, is needed, an image that has completely the same quality as an image captured by a general camera can be provided by switching off and thus removing the added optical element.

According to the present disclosure, when an image captured by an IoT camera, such as a smart home camera, is hacked or utilized as Big Data for artificial intelligence learning data and similar applications, the image, which is optically processed in an unidentifiable manner at the camera level and thus rendered unidentifiable, is output. Consequently, privacy can be protected fundamentally.

According to the present disclosure, a camera structure and a control method can be provided that are capable of effectively dealing with two situations. One situation is when a normal image is needed for video chatting, remote monitoring, or the like. The other situation is when an image processed in an unidentifiable manner is needed because an artificial intelligence operates in a general situation.

According to the present disclosure, an image encryption method can be provided that uses hardware and/or software encryption techniques. This method is capable of dealing with an environment where hacking of IoT devices is also continuously increasing and, if necessary, performing the camera function of a general webcam as well.

According to the present disclosure, not only the risks, such as hacking, but also the causes of breaches of sensitive privacy, which may occur during a data transmission process or a storage process, can be fundamentally eliminated by performing a subsequent deep learning process using optical encryption and an encrypted image.

According to the present disclosure, because a mathematical encryption key for an optically encrypted image is provided, it is also possible that the optically encrypted image is output as an original image, resulting from decryption, in a reception device when necessary.

According to the present disclosure, not only the risks, such as hacking, but also the causes of breaches of sensitive privacy, which may occur during a data transmission process or a storage process, can be fundamentally eliminated by performing a subsequent deep learning process using optical encryption and an encrypted image.

According to the present disclosure, when performing a function such as video chatting or remote monitoring through a switching technique such as the movement or rotation of an encryption optical element, a captured image can be provided in real time with completely the same image quality as an image captured by a general camera, without the burden of additional computation.

Further scope of applicability of the present disclosure will become apparent from the following detailed description. It should be understood, however, that the detailed description and specific examples, such as the preferred embodiment of the invention, are given by way of illustration only, since various changes and modifications within the idea and scope of the invention will be apparent to those skilled in the art.

## Brief Description of Drawings

FIG. 1 is a conceptual diagram illustrating an image transmission and reception system that includes electronic devices according to the present disclosure, which transmit or receive an encryptedly captured image.

FIG. 2 is a diagram illustrating a configuration of the transmission and reception system in FIG. 1.

FIG. 3 is a diagram illustrating a camera module of the electronic device according to the present disclosure, which includes an optical element, and a configuration for outputting an encrypted image through the camera module.

FIG. 4 is a conceptual diagram illustrating a change in a structure of the camera module according to the present disclosure and PSF-based image encryption and decryption processes.

FIG. 5A is a view illustrating a structure in which a moving member, including the optical element, moves in an area in front of the camera module and a use case that employs this structure. FIG. 5B is a view illustrating a structure in which the moving member moves without the optical member and a use case that employs this structure.

FIG. 6A is a set of views illustrating a 3-dimensional shape of the optical element according to the present disclosure that has the shape of a parabola, and the height of the optical height on a 2-dimensional plane. FIG. 6B is a set of views illustrating examples of a PFS image of the camera module in which the optical element in FIG. 6A is arranged.

FIG. 7A is a diagram illustrating a configuration of the electronic device according to the present disclosure that is capable of deforming the PSF image by rotating the optical element.

FIG. 7B is a set of diagrams illustrating examples of directions in which specific portions of the PSF images that can be deformed by rotating the optical element in FIG. 7A are indicated.

FIG. 8A is a flowchart illustrating a method of encrypting an image captured in the electronic device of the image transmission and reception system according to the present disclosure.

FIG. 8B is a flowchart illustrating a method of decrypting an image captured in the electronic device of the image transmission and reception system according to the present disclosure.

FIGS. 9A and 9B are graphs showing an example of a modulation function for a configuration of a general camera and an example of a modulation function for a configuration to which image encryption according to the present disclosure applies, respectively.

FIG. 10A is a set of views illustrating a structure in which a distance between the optical element and a second lens changes according to a rotational angle of the optical element. FIG. 10B is a set of views illustrating a structure in which the distance between the optical element and the second lens adjacent to the optical element changes with the movement of the optical element along a specific axial direction.

FIG. 11 is a set of views illustrating an optically encrypted image captured by the camera module, which includes the optical element, and an image to which software-based encryption further applies.

FIG. 12 is a flowchart according to the present disclosure for a process of decrypting the optically encrypted image.

FIGS. 13A is a set of views illustrating an encrypted image, and FIG. 13B is a set of views illustrating images resulting from restoration according to various techniques.

FIG. 14 is a view illustrating a configuration for acquiring an image resulting from decryption using a deep learning model in the electronic device according to the present disclosure that encrypts and decrypts an image.

## Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, an element, a component or a combination thereof disclosed in the specification, and it may also be understood that the existence or additional possibility of one or more other features, numbers, steps, elements, components or combinations thereof are not excluded in advance.

Electronic devices presented herein may be implemented using a variety of different types of terminals. Examples of such devices include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signages, robots, and the like.

An electronic device according to the present disclosure that is capable of transmitting or receiving an encryptedly captured image and an image transmission and reception system that includes the electronic device are described.

The amendments to the data-related laws that require that personal information be made unidentifiable to protect personal information while still allowing data to be utilized passed through the Korean National Assembly and have been in force since August 2020. According to the present disclosure, an image is blurred by switching on and thus adding an optical element, which is a new optical component, to a camera lens. As a result, even if utilized for deep learning and similar applications or if hacked, a personal image remains unidentifiable. However, there is proposed a method in which, when a unique function of a camera, such as video chatting or remote monitoring, is needed, an image that has completely the same quality as an image captured by a general camera can be provided by switching off and thus removing the added optical element.

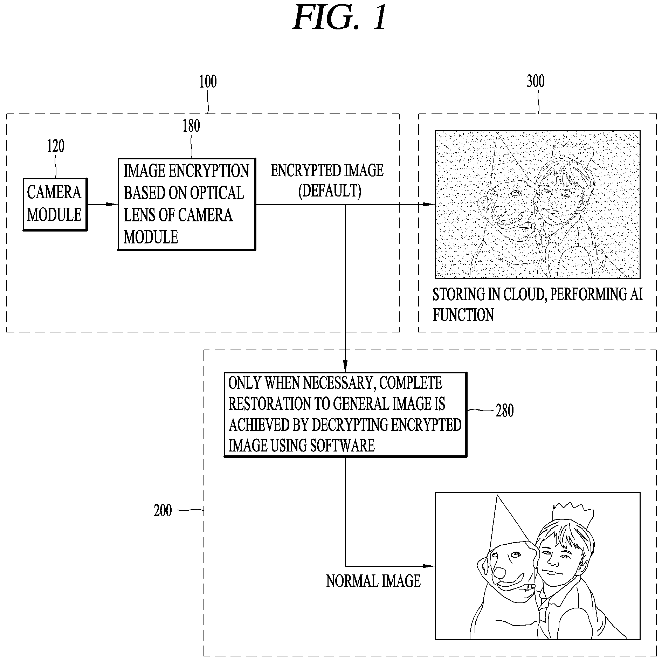

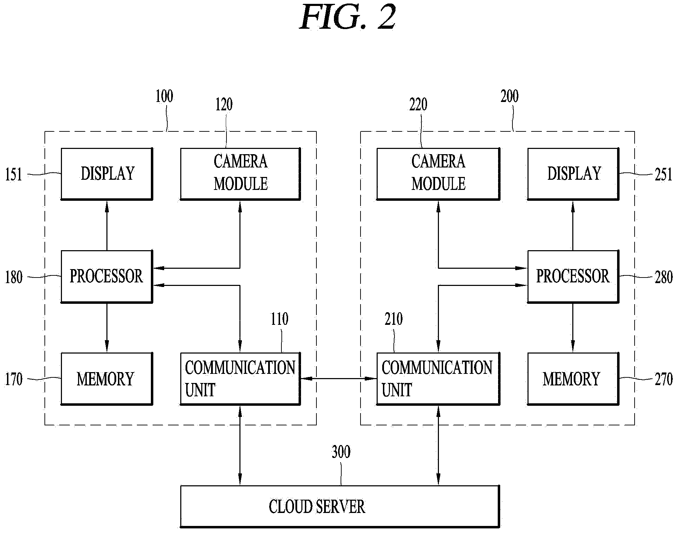

In association with this, FIG. 1 is a conceptual diagram illustrating the image transmission and reception system that includes electronic devices according to the present disclosure, which transmit or receive the encryptedly captured image. FIG. 2 is a diagram illustrating a configuration of the transmission and reception system in FIG. 2.

With reference to FIGS. 1 and 2, an electronic device 100 that transmits an encrypted image, derived from a captured image, may be configured in a manner that is enabled to communicate with a second electronic device 200 that is another electronic device. The electronic device 100 may store the encrypted image in a cloud server 300 that corresponds to an internal memory 170 or an external memory. The cloud server 300 may identify and specify persons based on artificial intelligence (AI), using encrypted images received from a plurality of electronic devices, and may derive the results of the analysis. Therefore, the cloud server 300 may be configured to store the encrypted images and analyze these encrypted images based on AI.

In association with a method, according to the present disclosure, of transmitting an encrypted image and restoring the encrypted image, the privacy protection measures for images captured from cameras, which have been researched, developed, and utilized, are described as follows. In almost most existing techniques, a captured image is transmitted, and a server encrypts the captured image and transmits the encrypted image to a reception device.

However, in these techniques, encryption is performed after the server or the reception device acquires an original image. Because of this, a problem arises in that privacy is not protected in a case where hacking occurs at the terminal level or where a server is hacked.

Therefore, in order to fundamentally protect the privacy of an image captured by a camera, according to the present disclosure, an encrypted image may be enabled to be output by adopting an optical encryption technique. In order to implement this feature, according to the present disclosure, a novel optical component (optical element) corresponding to an encryption key is inserted into a lens of an existing camera, thereby obscuring an image and rendering it unidentifiable.

The core of this technology is to additionally design a suitable optical element into a camera, and the designed optical element creates a defocused optical transfer function. This approach enables the acquisition of an unidentifiable image. In a camera system configured in this manner, an image can be restored using a software algorithm that mathematically understands the characteristics of the inserted optical element. Consequently, this camera system may be used like a general 2D camera when video chatting, remote monitoring, or the like is necessary. The optical element corresponding to the encryption key may be configured as an aspherical lens or the like in such a manner as to function as a phase mask for an optical signal.

With reference to FIGS 1 to 2, the electronic device 100 may be configured to include a communication unit 110, a camera module 120 that corresponds to an input interface, a display 151, a memory 170, and a processor 180. The second electronic device 200, which receives an image transmitted from the electronic device 100, may also be configured to include a communication unit 210, a display 251, a memory 270, and a processor 280. The second electronic device 200 that receives an image may also capture an image and transmit the captured image to the electronic device 100. Accordingly, the second electronic device 200 may also include a camera module.

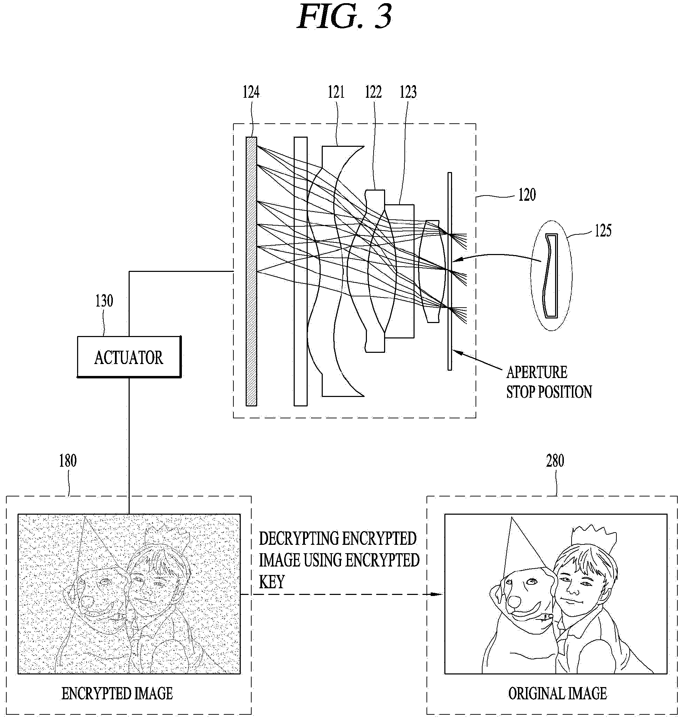

The camera module 120 may be configured to capture an image. The camera module 120 may include an optical element inside the camera module 120, the optical element being designed in such a manner as to capture an image as an encrypted image. The optical element, as illustrated in FIG. 3, may be configured as an optical lens that is arranged in front of a plurality of lenses. The display 151 may be operatively coupled to the camera module 120. The display 151 may be configured to display an encrypted image. The electronic device 100 may perform a decryption process that uses an encryption key.

To this end, the processor 180 may be operatively coupled to the camera module 120. The processor 180 may also be operatively coupled to the display 151 and the memory 170. The processor 180 may perform image encryption, which is based on an optical lens of the camera module 120. The processor 180 may control a captured image to be encrypted on the basis of the encryption key in a manner that is unidentifiable with the naked eye.

The processor 180 may perform the decryption process that uses the encryption key. The processor 180 may also be configured to transmit an encrypted image to the second electronic device 200 that is another electronic device. In association with this, the encryption key may be integrated into an application program, but is not limited to this integration. The encryption key may be upgraded within the application program and may also be received from another device. The processor 180 may also be configured to transmit an encrypted image to the cloud server 300.

Accordingly, even in a case where a specific person is included within a captured image, the specific person is encrypted in an unidentifiable manner. Consequently, the protection of the privacy of the specific person is possible. Therefore, an image is provided that is encrypted in an unidentifiable manner. For this reason, the entire system that includes the electronic device 100, which includes the camera module 120, and the second electronic device 200, which receives the encrypted image from the electronic device 100, may be referred to as a privacy camera system. At this point, encrypting an image in an unidentifiable manner may mean that the image is blurred and/or defocused to such an extent that a specific object within the image cannot be identified when viewed externally. However, the encrypting is limited to this blurring or defocusing. Therefore, encrypting an image in an unidentifiable manner may mean a technique in which an image is arbitrarily deformed to such an extent that a specific object within the image cannot be identified.

Only when necessary, the second electronic device 200 may decrypt an encrypted image using software and may restore the encrypted image to an original image as captured. The image resulting from the restoration is a pre-encrypted image, and the specific person within the image resulting from the restoration can be identified. For this reason, the image resulting from the restoration may also be referred to as a normal image.

The privacy camera system according to the present disclosure may be utilized for video meetings, remote monitoring, and the like and may operate in webcam mode. Only when necessary, the second electronic device 200 decrypts an encrypted image using software. Accordingly, the second electronic device 200 may restore the encrypted image to an original image as captured, on the basis of the encryption key and may hold video meetings and perform remote monitoring.

In association with this, if the second electronic device 200 and the cloud server 300 already have the encryption key, only the encrypted image may be transmitted to the second electronic device 200 and the cloud server 300, without the encryption key. In a case where an encryption key for a new image is updated, the updated encryption key may be transmitted to the second electronic device 200 and the cloud server 300.

The camera within the electronic device of the image transmission and reception system according to the present disclosure may include an optical element that changes a captured image in an unidentifiable manner. In association with this, FIG. 3 is a diagram illustrating the camera module of the electronic device according to the present disclosure, which includes the optical element, and a configuration for outputting an encrypted image through the camera module.

With reference to FIG. 3, the camera module 120 may be configured to include a plurality of lenses 121 to 123. The number of the plurality of lenses is not limited to the configuration in FIG. 3, and the plurality of lenses may be configured in combinations of convex lenses and/or concave lenses, depending upon the application. The camera module 120 may further include an optical element 125 that is arranged in front of a plurality of lenses, and is configured to encrypt a captured image in an unidentifiable manner. In association with this, the optical element 125 may be configured as an optical lens that is arranged in front of the plurality of lenses 121 to 123.

The camera module 120 may further include an image sensor 124 configured to sense an analog signal acquired through the optical element 125 and the plurality of lenses 121 to 123 and to convert the acquired analog signals into a digital signal. One of the plurality of lenses 121 to 123 may be embodied as a first lens 121 that is to be arranged adjacent to the image sensor 124. Another lens of the plurality of lenses 121 to 123 may be embodied as a second lens 123 that is to be arranged adjacent to the optical element 125.

A double-step encryption process may be performed. In the double-step encryption process, an image is encrypted through the optical element 125, and in addition, encryption is once more performed on the encrypted image using software. In association with this, the processor 180 may enable the optical element 125 to encrypt an image in an unidentifiable manner. To this end, the processor 180 may control the camera module 120 in such a manner that the optical element 125 encrypts an image in an unidentifiable manner. The processor 180 may once more encrypt the encrypted image using software.

The present disclosure relates to a method in which a captured image is controlled to be encrypted on the basis of the encryption key in a manner that is unidentifiable with the naked eye and in which the encrypted image is transmitted to another electronic device.

According to the present disclosure, the captured image may be controlled to be encrypted in an unidentifiable manner on the basis of the encryption key included in a camera optical system. In association with this, decryption is performed using software only in a case where a normal image is necessary, such as for video chatting or remote monitoring. Data from the captured images may be utilized as Big Data for AI learning or may be employed for the purpose of performing specific AI functions such as face recognition and behavior pattern recognition. In addition, in the case of transmission to or storage in the cloud, restoration to a normal image is not performed, and an image, captured by a camera in a way that is encrypted in an unidentifiable manner, may be utilized as it is. Accordingly, a method, according to the present disclosure, of encrypting an image primarily features the fundamental protection of privacy.

Configuring an encryption key on the basis of a point spread function (PSF) and a modulation transfer function (MTF), which are changed by the optical element 125, and performing encryption based on associated parameters are the primary features. In addition, a method of performing decryption on the basis of an encryption key using software is the primary feature.

As described above, the method, according to the present disclosure, of encrypting an image may be performed using software and hardware. In association with this use of hardware, it is possible that the image captured by the optical element 125 is deformed (encrypted) in hardware. In association with this, with reference to FIGS. 1 to 3, the processor 180 may configure a decryption key on the basis of the extent to which the image is deformed by the optical element. In addition, the processor 180 may control the communication unit 110 in such a manner as to transmit the encrypted image and the encryption key to the second electronic device 200 that is another electronic device.

The processor 180 may also control the encrypted image to be stored in the cloud server 300. The processor 180 may access the cloud server 300 and may control the encrypted image to be restored to a normal image. The processor 180 may control the encrypted image to be restored to the normal image on the basis of the encryption key. In addition, when the second device is an authenticated electronic device, the processor 280 may control the encrypted image to be restored to the normal image, that is, an original image, on the basis of the encryption key.

In a case where an image is deformed (encrypted) in hardware by the optical element 125 and/or is deformed (encrypted) in software by an encryption module, the encrypted image may be decrypted in software on the basis of the encryption key. In association with this, the processor 280 of the second electronic device that receives the encrypted image may restore the encrypted image to the normal image on the basis of the encryption key.

Therefore, the primary technical features of the method, according to the present disclosure, of encrypting an image and the electronic device performing the method may be summarized as follows, but are not limited to the following summary.

Image data, which is acquired in a blurred (encrypted) manner by the camera according to the present disclosure, may be utilized as Big Data for AI learning. The image data, which is encryptedly acquired by the camera, may be utilized for the purpose of specific AI functions, such as face recognition and behavior pattern recognition. In addition, the primary technical feature of the electronic device is that blurred (encrypted) images are utilized as they are, without being decrypted, when transmitting to or storing in the cloud.

The image data, which is acquired in a blurred (encrypted) manner by the camera according to the present disclosure, may be output as a normal image, recognizable by a person, for video chatting, remote monitoring, or the like. In this case, the primary technical feature of the electronic device is that when a program (such as a chatting program or a remote monitoring program) is executed, the program automatically decrypts and outputs an image in real time using the encryption key.

Therefore, even though a terminal with the camera according to the present disclosure is hacked, leaked image data remains blurred (encrypted). Accordingly, the present disclosure has features designed to prevent any resultant damage from the privacy breaches of each personal image captured by the camera.

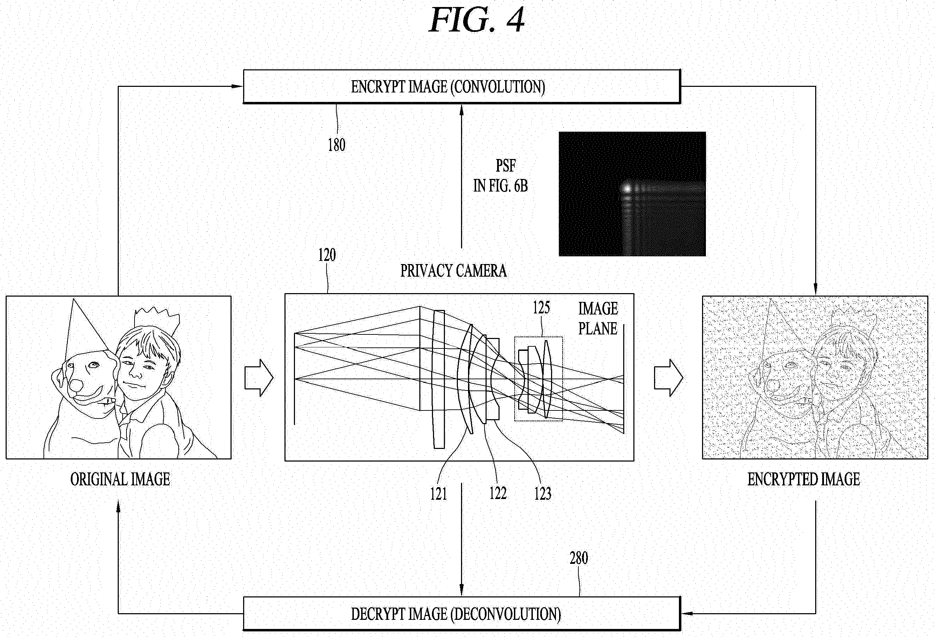

Image optical encryption and decryption methods according to the present disclosure, as described above, may be performed through a change in the structure of the camera module and/or through software-based encryption In association with this, FIG. 4 is a conceptual diagram illustrating the change in the structure of the camera module according to the present disclosure and PSF-based image encryption and decryption processes.

With reference to FIG. 4, an original image may be changed to an encrypted image through the camera module 120. The image passing through the plurality of lenses 121 to 123 within the camera module 120 may be changed to a spread image by the optical element 125. The optical element 125, as illustrated in FIGS. 3 and 4, may be configured with one or more optical elements. The extent to which the image is encrypted may be adjusted by changing the design of one or more optical elements and by optimizing the distances to the plurality of lenses 121 to 123, the relative rotational angle, and similar parameters.

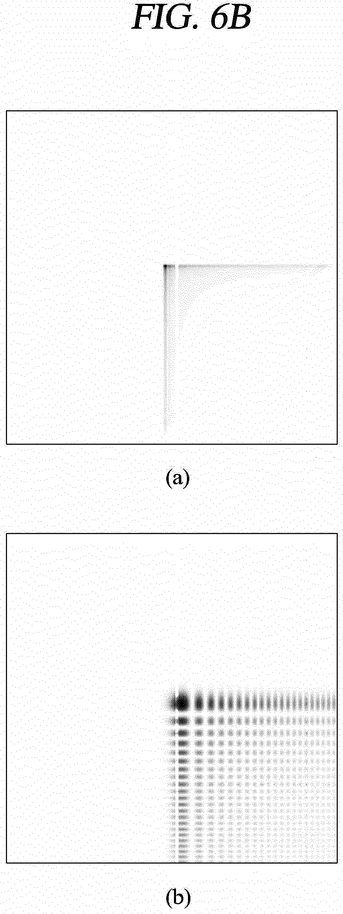

The encrypted image, resulting from the encryption by the optical element 125, may be acquired by the processor 180. The encrypted image, acquired by the processor 180, may be acquired by convolution computation of an original image with a point spread function (PSF), which is illustrated in FIG. 6B. Therefore, the encryption key may be formed by the PSF formed by the arrangement structure of the optical element 125.

The encrypted image, resulting from the encryption by the optical element 125, may be restored to an original image using the encryption key or a decryption key corresponding to the encryption key. The encrypted image may be restored to an original image (or a decrypted image with a predetermined range of similarity to the original image) by the processor 280 of another electronic device, which receives the encrypted image, using the encryption key (or the decryption key) formed by the PSF.

The electronic device 100 may be configured to include the camera module 120 and the optical element 124. The camera module 120 may include at least one lens from the lenses 121 to 123. The optical element 125 may be coupled in a manner that is movable in an area in front of at least one lens from the lenses 121 to 123, so that an object within an image is encrypted in an unidentifiable manner. At this point, the structure that enables "movably coupled" may be a structure in which the optical element 125 is coupled in the area in front of at least one lens from the lenses 121 to 123 in a manner that is rotatable on a per-predetermined angle basis. In addition, the structure that enables "movably coupled" may be a structure in which the optical element 125 moves in the area in front of at least one lens from the lenses 121 to 123 along one axial direction, for example, the x-axis direction.

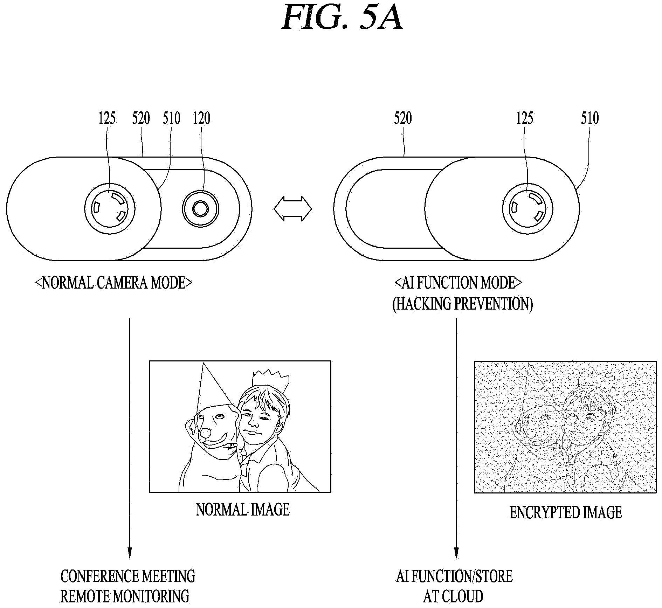

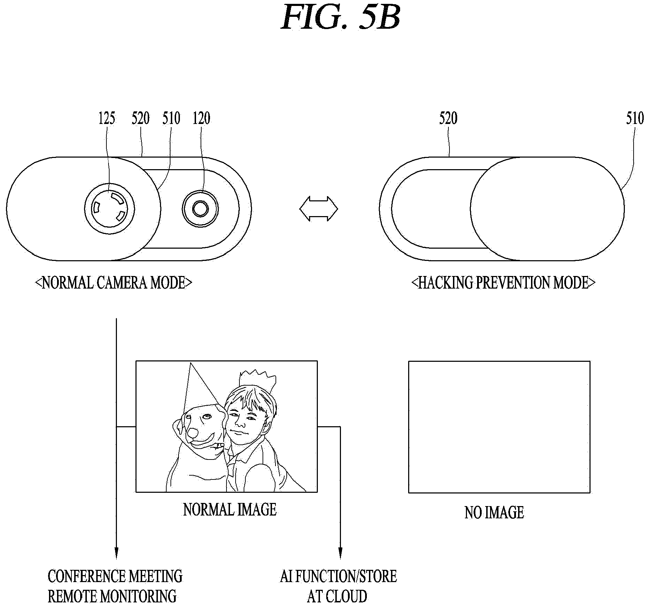

In association with this, FIG. 5A illustrates a structure in which a moving member, including the optical element, moves in an area in front of the camera module and a use case that employs this structure. FIG. 5B illustrates a structure in which the moving member moves without the optical member and a use case that employs this structure.

With reference to FIG. 5A, in a first mode, which is a general camera mode, the optical element 125 coupled to a moving member 510 is arranged at a first position in such a manner as not to overlap with the camera module 120. The moving member 510 may be movably coupled to the stationary member 520. In the first mode, an end portion on one side of the moving member 510 is coupled to one end portion on the internal side of the stationary member 520. In the first mode, an end portion of the other side of the moving member 510 is separated from the other end portion of the internal side of the stationary member 520. Accordingly, in the first mode in which the moving member 510 is arranged at the first position, the moving member 510 is in an open state. An image captured in the first mode is a general image in which an object can be identified.

In the structure in which the optical element 125 is arranged in front of the camera module 120, it is estimated that the mechanical tolerance is more than 10 times the required optical tolerance. However, the structure in which the optical element 125 is arranged in front of the camera module 120 does not require decryption that uses a complex technique. A decrease in performance rarely occurs when implementing a feature-based algorithm that is required for deep learning. In addition, a separate camera for optical encryption does not need to be manufactured. Therefore, it is possible to use an existing camera as is. However, an aperture stop at which the optical element 125 is arranged has to be positioned in front of the second lens 123. Therefore, the electronic device 100 according to the present disclosure that includes the optical element 125 encrypting an image does not need a high-performance chip for decrypting a normal image in real time and possibly provides a solution without a decrease in image quality. A shutter of the camera module 120 may be embodied in a manner that enables automatic switching using a solenoid drive mechanism or the like.

In a second mode, which is an AI functional mode (or a hacking prevention mode), the optical element 125 coupled to the moving member 510 is arranged at a second position in such a manner that overlaps with the camera module 120. In the second mode, an end portion on one side of the moving member 510 is separated from one end portion on the internal side of the stationary member 520. In the second mode, an end portion on the other side of the moving member 510 is coupled to the other end portion on the internal side of the stationary member 520. Accordingly, in the second mode in which the moving member 510 is arranged at the second position, the moving member 510 is in a closed state. An image deformed by the optical element 125 in the second mode is an encrypted image in which an object cannot be identified.

Therefore, even if the electronic device according to the present disclosure that includes the optical element 125 encrypting an image is hacked, it is not possible to identify the object by decrypting the encryptedly stored image, thereby enabling privacy protection. In association with this, when performing an AI function for image encryption, it is possible to render an object within an image unidentifiable.

With reference to FIG. 5B, in the first mode, which is the general camera mode, the moving member 510 is arranged at the first position in such a manner as not to overlap with the camera module 120. In the first mode in which the moving member 510 is arranged at the first position, the moving member 510 is in the open state. An image captured in the first mode is a general image within which an object can be identified.

In the second mode, which is the AI functional mode (or the hacking prevention mode), the moving member 510 is arranged at the second position in such a manner that overlaps with the camera module 120. In the second mode in which the moving member 510 is arranged at the second position, the moving member 510 is in the closed state. In the second mode, the camera module 120 is blocked from view by the moving member 510, and thus an image cannot be acquired through the camera module 120.

Therefore, in a case where an image file, which is captured by the camera module 120 and stored in the electronic device, which does not include the optical element in FIG. 5B, is hacked, there is a risk of a privacy breach. In addition, since the optical element 125 is not included, rendering personal information unidentifiable by performing an AI function does not take place. In association with this, a general image cannot be rendered unidentifiable using software, but the risk of hacking at the terminal level is still present. In addition, when the moving member 510 moves to a position at which the camera module 120 is arranged, although image-capturing is attempted through the camera module 120, no image is acquired.

The camera module 120 according to the present disclosure may be configured to include the plurality of lenses 121 to 123, the image sensor 124, and the optical element 125. The image sensor 124 may be arranged to be separated from the first lens 121, which is arranged rearmost among the plurality of lenses 121 to 123. The image sensor 124 may be configured to convert an analog signal, associated with an image acquired through the plurality of lenses 121 to 123, into a digital signal.

The optical element 125 may be arranged in front of the second lens 123 arranged frontmost among the plurality of lenses 121 to 123. The optical element 125 may be arranged in an exposure area of an iris, which adjusts an image capture area in such a manner as to adjust an amount of light to be introduced into the plurality of lenses 121 to 123.

The electronic device according to the present disclosure that encrypts image information may encrypt an image in different techniques by rotating the optical element 125 arranged in the area in front of the lenses 121 to 123 or moving the optical element 125 along one axial direction. In association with this, the electronic device 100 may further include an actuator 130 that moves the optical element 125 relative to the lenses 121 and 123. The actuator 130 may be embodied as a monitor, but is not limited thereto.

The actuator 130 rotationally moves the optical element 125 by a predetermined angle, thereby changing a format in which the image is encrypted. As an example, the actuator 130 may control the optical element 125 in such a manner as to encrypt the image, by rotationally moving the optical element 125 by 30 degrees or 45 degrees. The actuator 130 may control the optical element 125 in such a manner as to encrypt the image, by 15 degrees, 30 degrees, 45 degrees, 60 degrees, 90 degrees, or 120 degrees.

With reference to FIGS. 3 to 5A, the actuator 130 may control the optical element 125 in such a manner as to be arranged within or out of the image capture area. Accordingly, the actuator 130 may enable the image to be captured, by arranging the optical element 125 into the image capture area. In addition, the actuator 130 may enable an image to be captured, without going through encryption, by moving the optical element 125 out of the optical element 125.

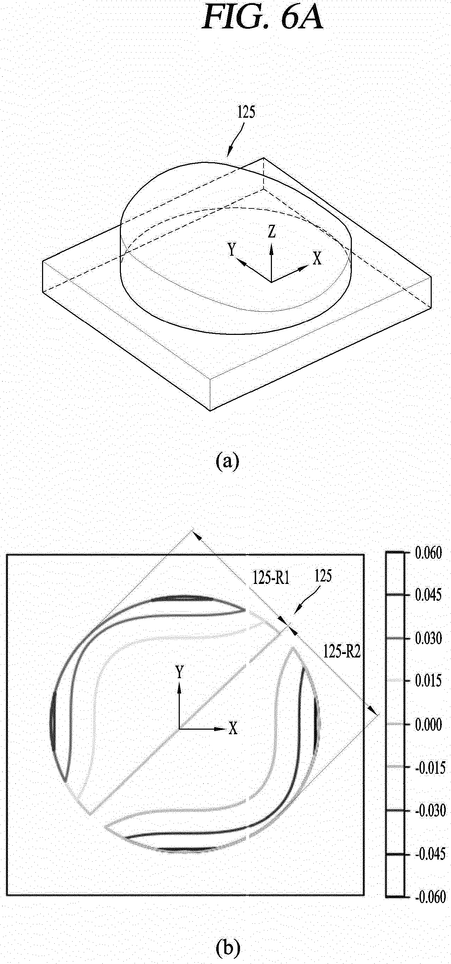

The optical element according to the present disclosure may be formed in the shape of a parabola. In association with this, FIG. 6A illustrates a 3-dimensional shape of the optical element according to the present disclosure that has the shape of a parabola, and the height of the optical height on a 2-dimensional plane. FIG. 6A illustrates an example of a PSF image of the camera module in which the optical element in FIG. 6A is arranged.

(a) of FIG. 6A illustrates the 3-dimensional shape of the optical element according to the present disclosure that has the shape of a parabola. (b) of FIG. 6A illustrates the height of the optical element in (a) of FIG. 6A on the 2-dimensional plane. With reference to (b) of FIG. 6A, the optical element 125 may be formed in such a manner that an upper area 125-R1 thereof has a greater height than a lower area 125-R2 thereof with respect to a predetermined angle.

With reference to FIG. 6A, a height z of the optical element of 125, which satisfies $z = \alpha x^3 + \beta y^3$, may be formed in the shape of a parabola. The variable n may be an integer that is equal to or greater than 1. $\alpha$ and $\beta$ are proportional constants and may be set to range from 0.01 to 0.5. In association with this, when $\alpha$ and $\beta$ are set to a value that is lower than 0.01, as illustrated in FIG. 5A, a blurring effect is reduced to a threshold level or lower, thereby making an encryption effect negligible. In contrast, when $\alpha$ and $\beta$ are set to a value that is equal to or higher than 0.5, it may be difficult to machine the optical element, or image restoration may be difficult.

(a) of FIG. 6B illustrates an example of a PSF image of the camera module in which the optical element as in FIG. 6A is arranged. (b) of FIG. 6B provides an enlarged illustration of the PSF image as in (a) of FIG. 6B. With reference to FIG. 6B, the point spread function refers to an image of a point source object present at an infinite distance in theory, which is formed on an image sensor of the camera. The asymmetrically spread PSF as in FIG. 6B may be generated using an encryption lens such as the optical element 125 in FIG. 6A. Unlike a normal camera image, an image encrypted in a blurred manner as in FIG. 5A may be acquired using the asymmetrically spread PSF.

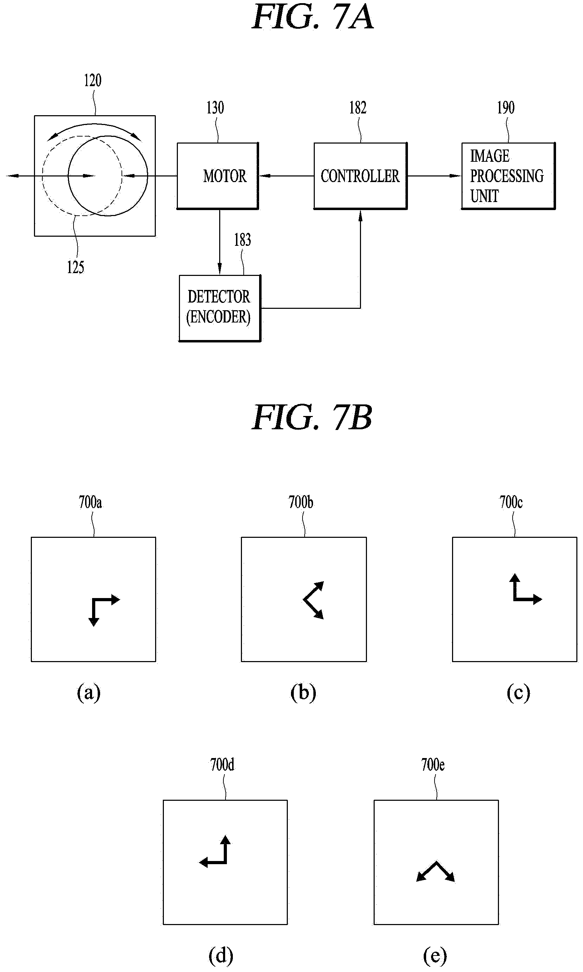

In the electronic device according to the present disclosure that encrypts an image, the PSF image may be variably deformed by rotating the optical element. In association with this, FIG. 7A illustrates a configuration of the electronic device according to the present disclosure that is capable of deforming the PSF image by rotating the optical element. FIG. 7B illustrates examples of directions in which specific portions of the PSF images that can be deformed by rotating the optical element are indicated.

With reference to FIG. 7A, the electronic device may include the camera module 120, which includes the optical element 125, a motor 130, a controller 182, a detector 183, and an image processing unit 190. The controller 182, the detector 183, and the image processing unit 190 may be included in the processor 180 in FIG. 2, but is not limited to this configuration. The controller 182, the detector 183, and the image processing unit 190 may also be embodied separately from the processor 180.

With reference to FIGS. 2, 3, and 7A, the camera module 120 may be configured to include the plurality of lenses 121 to 123 and the optical element 125. An image may be encrypted in various encryption formats in differently blurred patterns by rotating the optical element 125 relative to the lenses 121 to 123 or rotating the entire camera module 120. As an example, an image may be encrypted in various encryption formats in different blurred patterns by moving the optical element 125 relative to the lenses 121 to 123 along a specific axial direction. The motor 130 may be configured to rotate the optical element 125 or the camera module 120. As another example, the motor 130 may be configured to move the optical element 125.

The controller 182 may control the motor 130 in such a manner that the optical element 125 or the camera module 120 is rotated. The detector 183 may detect a rotational angle of the optical element 125 or the camera module 120 in conjunction with the motor 130 and the controller 182. The detector 183 is configured to encode the rotational angle of the motor 130. For this reason, the detector 183 may also be referred to as an encoder. The image processing unit 190 may be configured to restore the encrypted image on the basis of the rotational angle of the optical element 125 or the camera module 120, in conjunction with the controller 182.

In association with a method of control that varies with the rotational angle, the motor 130, an encoder 182, and the controller 182 may set a posture (angle) of an encryption lens, such as the optical element 125, to an arbitrary direction. The image processing unit 190 may select the PSF image that varies with the posture (angle) of the encryption lens. In association with this, simulation using an optical tool, or the PSF secured by performing image capture at a specific angle in advance may be utilized.

With reference to FIGS. 7A and 7B, comparisons are made among images that result when the encryption lens, such as the optical element 125, is rotated by a predetermined angle. (a) of FIG. 7B illustrates a first orientation 700a of the PSF image in a structure in which the optical element is arranged to 0 degrees. In a structure in which the optical element is arranged to 0 degrees, the first orientation 700a of the PSF image may be set to 0 degrees/-90 degrees. (b) of FIG. 7B illustrates an orientation 700b of the PSF image in a structure in which the optical element is clockwise rotated to a predetermined angle (for example, 30 degrees). In a structure in which the optical element is arranged to a predetermined angle (for example, 30 degrees), the second orientations 700b of the PSF image may be set to 30 degrees/-60 degrees.

The PSF image in (c) of FIG. 7B indicates an orientation 700c of the PSF image in a structure in which the optical element is arranged to 90 degrees. In the structure in which the optical element is arranged to 90 degrees, an orientation 700c of the PSF image may be set to 90 degrees/0 degrees. The PSF image in (d) of FIG. 7B indicates the orientation 700c of the PSF image in a structure in which the optical element is arranged to 270 degrees (-90 degrees). In the structure in which the optical element is arranged to 270 degrees (-90 degrees), the orientation 700c of the PSF image may be set to -90 degrees/-180 degrees. The PSF image in (e) of FIG. 7B indicates the orientation 700c of the PSF image in a structure in which the optical element is arranged to a predetermined angle (for example, -30 degrees). In the structure in which the optical element is arranged to a predetermined angle (for example, -30 degrees). The orientation 700c of the PSF image may be set to -30 degrees/-120 degrees.

The encrypted image may be restored using the encryption key (decryption key) that is based on the PSF selected as in FIG. 7B. When restoration is performed through a deep learning method, a model trained in accordance with the PSF may be used.

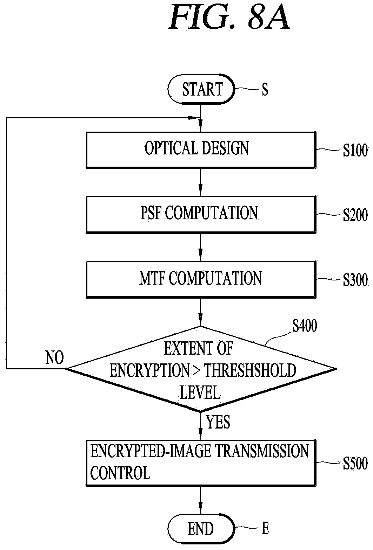

In the electronic device of the image transmission and reception system according to the present disclosure, a process of encrypting a captured image may be repeatedly performed by adjusting an optical structure and the extent to which a specific object within an image is spread and displayed. In association with this, FIG. 8A is a flowchart illustrating a method of encrypting an image captured in the electronic device of the image transmission and reception system according to the present disclosure.

With reference to FIG. 8A, the method of encrypting a captured image may be configured to include an optical design process S100, a point spread function (PSF) computation process S200, a modulation transfer function (MTF) computation process S300, and an encryption extent determination process S400. In addition, the method of encrypting an image may be configured to further include an encrypted-image transmission control process S500. In addition, the method of encrypting an image may further include an encryption key change and non-change determination process S600). Even in the encrypted-image transmission control process S500, when the encryption key is determined to need to be changed, the encryption key may be changed and the encrypted image may be transmitted along with the changed encryption key. Even in the encrypted-image transmission control process S500, when the encryption key is determined to need to be changed, in order to change the encryption key, the optical design process S100 and the process subsequent thereto, or the PSF computation process S200 and the process subsequent thereto, may also be repeated.

With reference to FIGS. 1 to 8A, in the optical design process S100, the optical structure may be designed by determining a distance between the optical element 125 and the plurality of lenses 121 to 124 and the rotational angle of the optical element 125. In the point spread function (PSF) computation process S200, a parameter for the point spread function (PSF) is determined in such a manner that a normal image is encrypted in a manner that is unidentifiable with the naked eye at a threshold level or higher. Specifically, the parameter for the point spread function (PSF) is determined in such a manner that the normal image is encrypted to a threshold or higher at a defocused position relative to the focal point of a pre-encryption normal image in a manner that is unidentifiable with the naked eye. In association with this, the point spread function (PSF) computation process S200 may be repeatedly performed. The parameters for the point spread function (PSF), which are updated through the point spread function (PSF) computation process S200 that is repeatedly performed may be referred to as first, second, third, and so forth up to N-th parameters, respectively.

In the modulation transfer function (MTF) computation process S300, the image encrypted in a spatial domain may be acquired through convolution computation. In association with this, Mathematical Equation 1 mathematically expresses an encryption algorithm and a restoration algorithm.

## [Mathematical Equation 1]

$$B=S*K \quad \Rightarrow \quad S=B/K$$

In Mathematical Equation 1, B depicts an encrypted image, and S is a pre-encryption normal image. K depicts a point spread function (PSF), "*" depicts a convolution operator, and "/" depicts a deconvolution operator. The point spread function (PSF) represents a characteristic of a camera lens output image for an ideal point source in the spatial domain. In association with this, FIGS. 7A and 8A illustrate an example of a PSF pattern associated with optical encryption according to the present disclosure and an example of a PSF pattern that results from defocusing a general camera, respectively.

The modulation transfer function (MTF) may be acquired by Fourier-transforming the point spread function (PSF) into a frequency domain.

In the modulation transfer function (MTF) computation process S300, a parameter associated with the modulation transfer function (MTF) may be computed by Fourier-transforming the encrypted image. In the modulation transfer function (MTF) computation process S300, the parameter associated with the modulation transfer function (MTF) may be computed by Fourier-transforming the encrypted image using the encryption key and/or a PSF parameter corresponding to the encryption key.

Subsequently, in the encryption extent determination process S400, it may be determined, on the basis of the parameter associated with the modulation transfer function (MTF), whether or not the extent to which an image is encrypted satisfies a threshold level. When the extent to which the image is encrypted satisfies the threshold level, the encrypted-image transmission control process S500 may be performed that controls the parameter associated with the MTF and the encrypted image to be transmitted to the second electronic device 200.

In contrast, when the extent to which the image is encrypted is determined not to satisfy the threshold level, the optical design process S100 and the processes subsequent thereto may be repeated, but the method is not limited to this repetition. As another example, when the extent to which the image is encrypted is determined not to satisfy the threshold level, the point spread function (PSF) computation process S200 and the processes subsequent thereto may be repeated without repeating the optical design process S100. Accordingly, even without changing and redesigning hardware, such as the optical structure, the extent to which the image is encrypted may also be changed by reconfiguring the parameter for the PSF.

When the extent to which the image is encrypted is determined not to satisfy the threshold level, the processor 180 acquires an encrypted second image in the spatial domain through the convolution computation in the point spread function (PSF) computation process S200. Through the modulation transfer function (MTF) computation process S300, the processor 180 computes a second parameter associated with the modulation transfer function (MTF) by Fourier-transforming the encrypted second image. Through the encryption extent determination process S400, the processor 180 may determine, on the basis of the computed second parameter, the extent to which the encrypted second image is encrypted. When the extent to which the second image is encrypted satisfies a threshold level, the processor 180 may perform control in such a manner that the second parameter associated with the MTF and the encrypted second image are transmitted to the second electronic device 200.

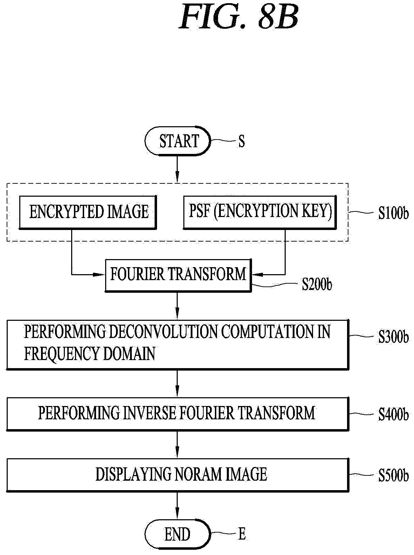

In the electronic device of the image transmission and reception system according to the present disclosure, a process of decrypting a captured image may be performed on the basis of the optical structure and of the PSF parameter, which results from adjusting the extent to which the specific object within the image are spread, that is, the encryption key. In association with this, FIG. 8B is a flowchart illustrating a method of decrypting an image captured in the electronic device of the image transmission and reception system according to the present disclosure.

With reference to FIG. 8B, the method of decrypting the encrypted image may be configured to include an encrypted-image reception process S100b, a Fourier transform process S200b, a deconvolution process S300b, an inverse Fourier transform process S400b, and a normal image display process S500b.

With reference to FIGS 1 to 8B, the method of decrypting the encrypted image may be regarded as being performed in the second electronic device 200 that receives the encrypted image. However, the method is not limited to this configuration, and an application in which the electronic device 100 and the second electronic device 200 perform bidirectional image transmission may be considered. Therefore, it may also be assumed that both the electronic device 100 and the second electronic device 200 encrypt and transmit an image and receive and decrypt the encrypted image.

In the encrypted-image reception process S100b, the encrypted image and the PSF parameter associated with the encrypted image, that is, the encryption key, may be received. In the Fourier transform process S200b, the encrypted image may be Fourier-transformed on the basis of the encryption key, that is, the PSF parameter associated with the encrypted image. In the deconvolution process S300b, deconvolution computation may be performed on the image that is encrypted in the frequency domain.

In the inverse Fourier transform process S400b, the inverse Fourier transform may be performed on an image, resulting from the restoration from the frequency domain through the deconvolution computation, thereby restoring the result of the inverse Fourier transform to a normal image in the spatial domain. In the normal image display process S500b, the normal image resulting from the restoration may be controlled to be displayed on a screen of the display.

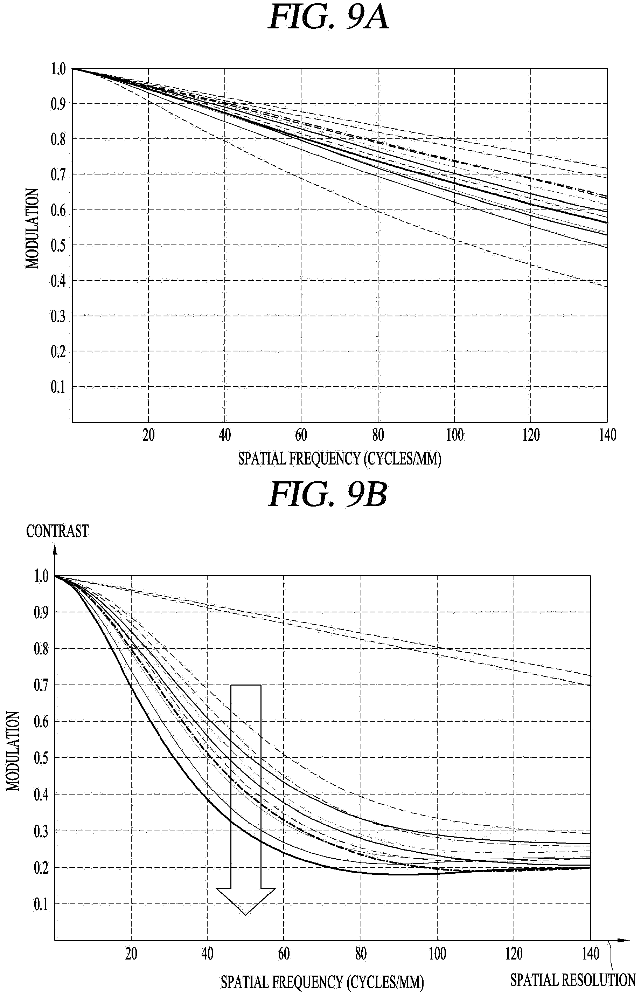

When Fourier-transforming the PSF corresponding to the encryption key according to the present disclosure, the modulation transfer function (MTF) may be acquired, and the extent to which the image is encrypted, that is, the extent to which the image is unidentifiable, may also be designed based on the MTF. In association with this, FIGS. 9A and 9B are graphs showing an example of a modulation function for a configuration of a general camera and an example of a modulation function for a configuration to which image encryption according to the present disclosure applies, respectively.

With reference to FIG. 9A, in the configuration of the general camera, as the spatial frequency increases, the modulation of the image, that is, the extent to which the image is encrypted (the extent to which the image is unidentified increases in proportion to the spatial frequency. In association with this, the modulation transfer function (MTF) serves as a performance index indicating the performance of a camera or a lens and corresponds to a performance index that assigns the ability to reproduce a fine portion of a subject, that is, a resolution response.

With reference to FIG. 9B, in the configuration to which the image encryption according to the present disclosure applies, as the spatial frequency increases, the modulation of the image, that is, the extent to which the image is encrypted (the extent to which the image is unidentified) increases at a high rate within a predetermined range. In addition, in a predetermined spatial frequency range, a structure in FIG. 9B has a higher non-identification value than a structure in FIG. 9A. The non-identification value is associated with the modulation of the image and the extent to which the image is encrypted (the extent to which the image is unidentified). Therefore, when the extent to which the image is unidentified is tuned starting from the optical design step, the image encryption based on the MTF parameter as in FIG. 9B may be performed. In association with this, the MTF parameter may be a spatial frequency associated with the spatial frequency, but is not limited thereto.

With reference to FIGS. 1 to 9B, the electronic device 100 according to the present disclosure, which includes the optical element and encrypts an image, is described. One surface of the optical element 125 that faces the second lens 123, among the plurality of lenses 121 to 123, may be formed in the shape of a parabola along one axial direction and the other axial direction perpendicular to the one axial direction. In association with this, the optical element 125 may be formed in the shape of a parabola in such a manner that the height z thereof satisfies $z = \alpha x^3 + \beta y^3$, but is not limited to this shape. The optical element 125 may be formed in the shape of a parabola in such a manner that the height z thereof satisfies $z = \alpha x^{2n+1} + \beta y^{2n+1}$ where n may be an integer that is equal to or greater than 1, resulting in odd powers. $\alpha$ and $\beta$ are proportional constants and may be set to range from 0.01 to 0.5. In association with this, when $\alpha$ and $\beta$ are set to a value that is lower than 0.01, as illustrated in FIG. 5A, the blurring effect is reduced to a threshold level or lower, thereby making the encryption effect negligible. In contrast, when a and $\beta$ are set to a value that is equal to or greater than 0.5, it may be difficult to machine the optical element, or the image restoration may be difficult.

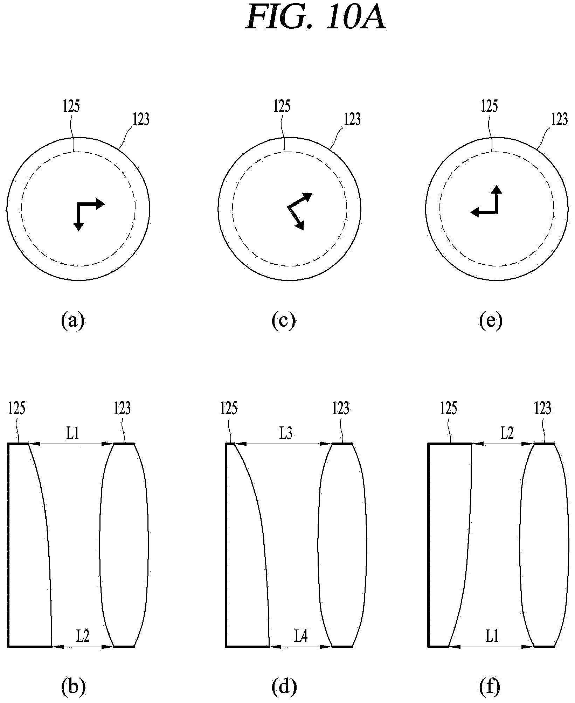

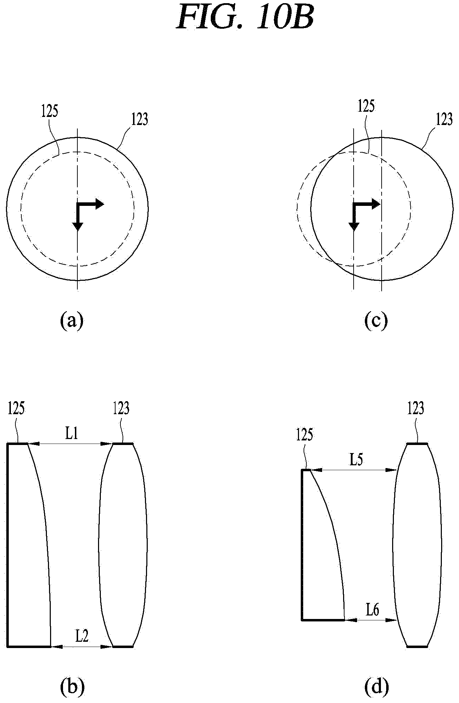

In the electronic device according to the present disclosure that encrypts an image, the rotation or transition of the optical element changes a distance between the optical element and the second lens adjacent to the optical lens, thereby enabling a change in the encryption format. In association with this, FIG. 10A illustrates a structure in which the distance between the optical element and the second lens adjacent to the optical element changes according to a rotational angle of the optical element. FIG. 10B illustrates a structure in which the distance between the optical element and the second lens adjacent to the optical element changes with the movement of the optical element along a specific axial direction.

(a) of FIG. 10A illustrates a structure in which the rotational angle of the optical element 125 is arranged to 0 degrees. When the rotational angle is 0 degrees as in (a) of FIG. 10A, as in (b) of FIG. 10A, the distance between one surface of the optical element 125 and the second lens 123 is reduced from a first distance L1 at a first end of the image capture area to a second distance L2 at a second end thereof along one axial direction. An image may be encrypted by being formed in such a manner that the distance is reduced from the first distance L1 to the second distance L2 along one axial direction. With reference to FIGS. 2 and 10A, the processor 180 of the electronic device 100 may control a format in which the image is encrypted, by controlling the actuator 130.

(c) of FIG. 10A illustrates a structure in which the rotational angle of the optical element 125 is set to a predetermined angle. When the rotational angle, as in (c) of FIG. 10A, ranges from 0 degrees to 90 degrees, as in (d) of FIG. 10A, the distance between one surface of the optical element 125 and the second lens 123 may be changed by the rotational movement of the optical element 125. In association with this, the distance can be changed from a third distance L3 at the first end to a fourth distance L4 at the second end along one axial direction. In association with this, the third distance L3 is different from the first distance L1, and the fourth distance L4 is different from the second distance L2.

The image may be encrypted in the encryption format that varies according to the rotational angle of the optical element 125. For example, as the optical element 125 is rotationally moved by 0 degrees, 90 degrees, or 180 degrees, the optical element 125 may encrypt the image in a first encryption format, a second encryption format, or a third encryption format, respectively. In association with this, in a case where the rotational angle of the optical element 125 is 0 degrees, when the first distance L1 at the first end of the image capture area is reduced to the second distance L2 at the second end thereof along one axial direction, an image may be encrypted in the first encryption format.

In a case where the optical element 125 is rotationally moved by 90 degrees through the actuator 130 in FIG. 2, the first distance L1 at the first end of the image capture area may be reduced to the second distance L2 at the second distance L2 thereof along the other axial direction perpendicular to one axial direction. Accordingly, in the case where the optical element 125 is rotationally moved by 90 degrees, an image may be encrypted in the second encryption format different from the first encryption format.

(e) of FIG. 10A illustrates a structure in which the rotational angle of the optical element 125 is arranged to 180 degrees. When the rotational angle, as in (e) of FIG. 10A, is 180 degrees, as in (f) of FIG. 10A, the distance between one surface of the optical element 125 and the second lens 123 may be changed by the rotational movement of the optical element 125. In a case where the optical element 125 is rotationally moved by 180 degrees through the actuator 130, the distance may be increased from the second distance L2 at the second end of the image capture area to the first distance L1 at the first end thereof along one axial direction. Accordingly, in the case where the optical element 125 is rotationally moved by 180 degrees, the image may be encrypted in the third encryption format different from the first encryption format and the second encryption format.

The electronic device 100 that encrypts image information may further include a memory 170 in which the encryption key and/or the decryption key is stored. The processor 180 may decrypt the encrypted image using the encryption key (or the decryption key). The decryption key may be configured as a key corresponding to the encryption key. The memory 170 may be configured in such a manner that the encryption keys, formed as results of the rotational movements of the optical element 125 by predetermined angles, are stored therein. The encrypted image and the encryption keys may be stored in the memory 170 or a separate server 300.

The electronic device 100 according to the present disclosure that encrypts image information may decrypt the encrypted image on the basis of the encryption key (or the decryption key). The electronic device 100 may decrypt the encrypted image on the basis of the encryption key (or the decryption key) and may display the decrypted image on the display 151.

The second electronic device 200, which is another electronic device, may decrypt the encrypted image on the basis of the encryption key (or the decryption key) and may display the decrypted image on the display 251.

Processors 180 and 280 may determine whether or not the authority to access the encrypted image is retained. The authority to access the encrypted image may be the authority to access or the authority to view the image on the electronic device 100 or 200, depending on a type of application program. When the authority to access the encrypted image is determined to be retained, the processor 180 may acquire from the memory 170 the encryption key corresponding to the angle by which the optical element 125 is rotated. The processor 180 may decrypt the encrypted image on the basis of the acquired encryption key and may display the decrypted image on the display 170 in an identifiable manner.

The processor 180 may encrypt an image on the basis of the changed second encryption key and may decrypt the encrypted image. The processor 180 may encrypt an image using a different encryption key when the encryption key is determined to have been leaked by an external terminal or depending on the type of application. In association with this, the processor 180 may encrypt an image by rotationally moving the optical element 125 by a different angle when the encryption key is determined to have been leaked or depending on the type of application.

After the optical element 125 is rotationally moved by the different angle, the processor 180 may redetermine whether or not the authority to access the encrypted image is retained. When the authority to access the encrypted image is determined to be retained, the processor 180 may acquire from the memory 170 the second encryption key (or a second decryption key) corresponding to the different angle. The processor 180 may decrypt the encrypted image on the basis of the acquired second encryption key and may display the decrypted image on the display 170 in an identifiable manner.

According to another embodiment, the encryption formation may be changed by moving the optical element 125 along one axial direction or the other axial direction. In association with this, the processor 180 may control the format in which the image is encrypted, by controlling the actuator 130. (a) of FIG. 10B illustrates a structure in which the center of the optical element 125 and the center of the second lens adjacent to the optical element 125 are the same. In a structure in (a) of FIG. 10B, as in (b) of FIG. 10B, the distance between one surface of the optical element 125 and the second lens 123 is reduced from the first distance L1 at the first end of the image capture area to the second distance L2 at the second end thereof along one axial direction. (c) of FIG. 10B illustrates a structure in which the center of the optical element 125 is moved by a predetermined distance along the other axial direction from the center of the second lens 123 adjacent to the optical element 125. The movement of the center of the optical element 125 may reduce an area where optical encryption is performed.

The processor 180 may control the format in which the image is encrypted, by moving the optical element 125 along the other axial direction through the actuator 130. With reference to (d) of FIG. 10B, the distance between one surface of the optical element 125 and the second lens 123 is reduced, by moving the optical element 125 along the other axial direction, from a fifth distance L5 at the first end of the image capture area to a sixth distance L6 at the second end thereof along one axial direction. The fifth distance L5 may be different from the first distance L1, and the sixth distance L6 may be different from the second distance L2. In a structure where the center of the optical element 125 is the same as the center of the camera module 120, the distance between one surface of the optical element 125 and the second lens 123 is formed as the first distance L1 at the first end of the image capture area and the second distance L2 at the second end thereof.

The electronic device 100 according to the present disclosure that encrypts image information determines on the basis of the type of application program whether or not encryption is performed, and when encryption is necessary, moves the optical element 125 into the image capture area. In association with this, on the basis of the type of application program that was executed or is being executed, the processor 180 may determine whether or not the image needs to be encrypted.

When the image is determined not to need to be encrypted, the processor 180 may move the optical element 125 out of the image capture area through the actuator 130. The processor 180 may perform control in such a manner that the image is not encrypted, by moving the optical element 125 out of the image capture area along the other axial direction. When the image is determined to need to be encrypted, the processor 180 may move the optical element 125 into the image capture area through the actuator 130. The processor 180 may perform control in such a manner that the image is encrypted, by moving the optical element 125 into the image capture area along the other axial direction.

The electronic device 100 according to the present disclosure that encrypts image information may improve security through hardware-based encryption that uses the optical element 125, and through software-based encryption that uses a separate encryption key. Specifically, an optically encrypted image has the possibility of being hacked and being image-restored using only deep learning, thereby highlighting the need to maximize security robustness. In association with this, it is possible to diversify encryption by deforming (for example, rotating or shifting) an encryption element in such a manner as to have the PSF that differs among camera modules.

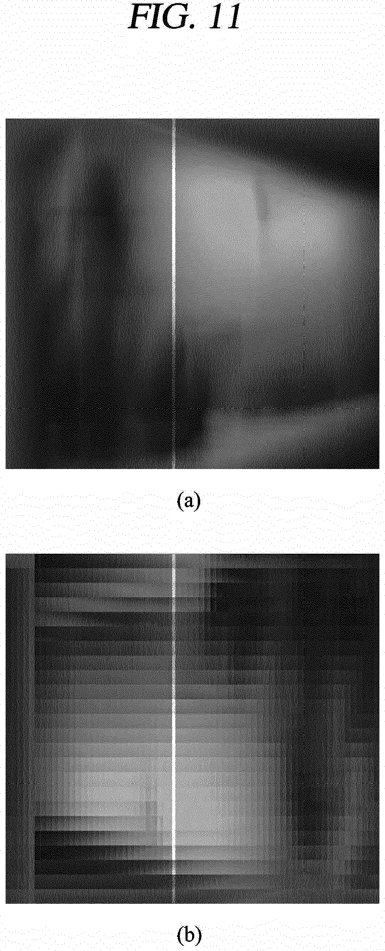

The software-based encryption may apply additionally that makes it impossible to distinguish among camera modules that have the same type of encryption element. Software encryption, which depends on a camera serial number, may apply to the encryptedly captured image. Accordingly, a customer or a user may receive only a software-encrypted image through the camera output. The deformed encryption element, which has the PSF which differs among the camera modules, may be employed, and the software encryption, which depends on the camera serial number, may further apply. In association with this, FIG. 11 illustrates the optically encrypted image captured by the camera module, which includes the optical element, and an image to which the software-based encryption further applies. FIG. 11A illustrates the optically encrypted image captured by the camera module, which includes the optical element. FIG. 11B illustrates an image that results from further applying the software-based encryption to the optically encrypted image. As in FIG. 11B, the image that, as in FIG. 11A, is optically encrypted by the optical element, may be further divided to predetermined tile heights and tile widths and be displayed.

As an example of a software encryption method, the encrypted image may be divided into tiles with heights and widths according to the camera serial number. In addition, a tile encryption technique may be determined according to the camera serial number. For example, in a case where the camera serial number is configured like x2345, the tile height may be determined to be 2 and the tile width to be 3. The tile encryption technique may be determined by x, which precedes the tile height.

In association with the software-based encryption, with reference to FIGS. 2 and 3, the processor 180 may further encrypt the image, encrypted by the optical element 125, using software on the basis of an encryption code. The processor 180 may further the image, which is encrypted by the optical element 125, using software on the basis of the encryption code that differs according to the rotational angle of the optical element 125. Therefore, even if the software-based encryption code is leaked, the security can be improved using the encryption code that differs with the rotational angle of the optical element 125.

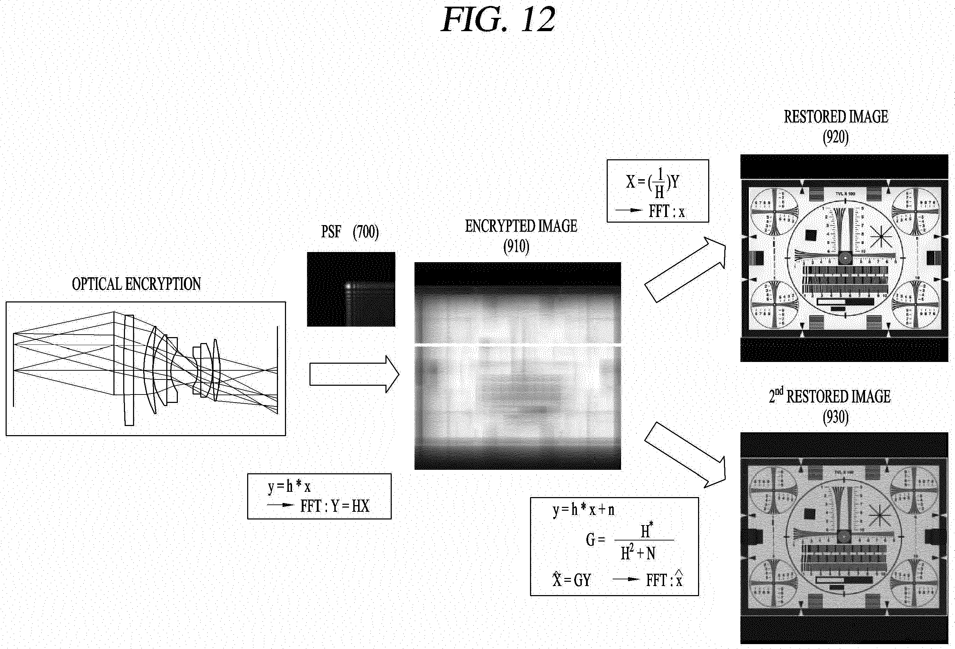

A technique of restoring the optically encrypted image in the electronic device according to the present disclosure that encrypts or decrypts image information is described. In association with this, FIG. 12 is a flowchart according to the present disclosure for a process of decrypting the optically encrypted image.

With reference to FIGS. 3 and 12, the encrypted image may be restored by a PSF Wiener image restoration technique. Specifically, the optical encryption may be performed by the camera module 120 including the optical element 125, and a decrypted image 920 may be acquired using a PSF 700 and an encrypted image 910.

In association with this, the PSF image 700 may be acquired by image-capturing a point light source. Restoration to an original image x may be achieved by performing deconvolution on an encrypted image y and a PSF image h. In association with this, the expression y = h*x may be established and "*" depicts convolution computation. The expression Y = HX may be established using FFT, and restoration to the original image X may be achieved by applying inverse PSF computation on a float value of data on the encrypted image. Therefore, the expression X = (1/H)Y may be established.

Data loss may occur because the data on the encrypted image is converted from a float type to an integer type during transmission, storage, and compression processes. Therefore, during the conversion-to-an-integer process after float computation, information loss and FFT deconvolution in a frequency domain assume periodic repetition of an image signal. However, the encrypted image is one signal, and therefore, an error may occur.

In addition, due to the spread characteristic of the PSF image, considering problems such as image border information loss, restoration may be achieved using a Wiener filter. Accordingly, in actual application, an artifact and detail loss may occur in a second decrypted image 930. In association with this, the expression y = h*x + n may be established, "*" depicts convolution computation, and n depicts unknown noise. Accordingly, in actual application, the expression X = GY and the expression G = H*/(H² + N) may be established in a frequency domain of the second decrypted image 930 using a transfer function G of the Wiener filter. x, which is the second decrypted image 930, may be acquired by performing IFFT on X.

In actual application, the quality of the second decrypted image 930 decreases. Thus, when webcam functions, such as video chatting and remote monitoring, is used, there may also be a limitation to marketability. However, when the second decrypted image 930 is acquired using a deep learning function, the decrease in quality seldom has an impact.

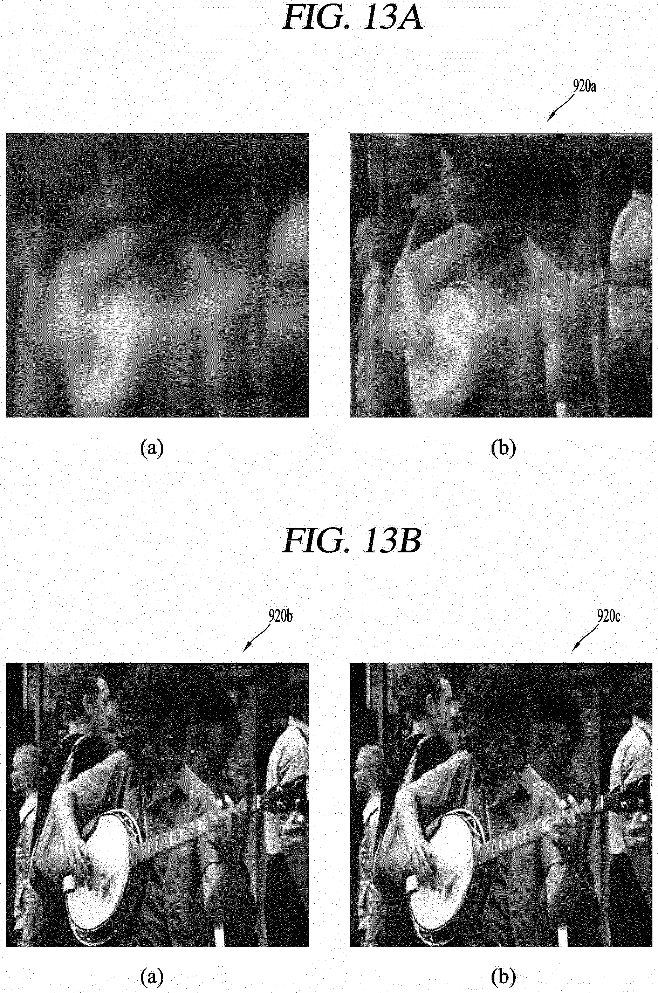

Therefore, the electronic device according to the present disclosure that encrypts or decrypts image information may perform the quality of the image resulting from the restoration, through deep learning. In association with this, FIGS. 13A illustrates the encrypted image, and FIG. 13B illustrates the images resulting from the restoration according to various techniques.

(a) of FIG. 13A illustrates the optically encrypted image that is captured by the camera module including the optical element. (b) of FIG. 13B illustrates a first image 920a resulting from the restoration based on a PSF Wiener filter, (a) of FIG. 13B illustrates a second image 920b resulting from the restoration with improved image quality through deep learning. (b) of FIG. 13B illustrates a third image 920c, which results from direct restoration by performing deep learning on the encrypted image without applying the PSF Wiener filter.

With reference to FIG. 12 and (b) of FIG. 13A, the first image 920a may be acquired through IFFT after obtaining X = (1/H)Y using a transfer function H of the PSF Wiener filter h. Because an error and similar issues are not reflected during the transmission, storage, and compression processes of the encrypted image, the first image 920a is not completely restored to the original image, and blurring at a predetermined level or higher occurs. Accordingly, the quality of the first image 920a decreases, and, depending on the situation, an object within the first image 920a may not be accurately identified.

To improve the quality of the image resulting from the restoration based on the PSF Wiener filter, the PSF Wiener image and the original image may be configured as learning data, and additional deep learning may be performed. The second image 920b as in (a) FIG. 13B, which is an image resulting from the restoration with improved image quality by applying the trained deep learning model to the PSF Wiener image, may be acquired.

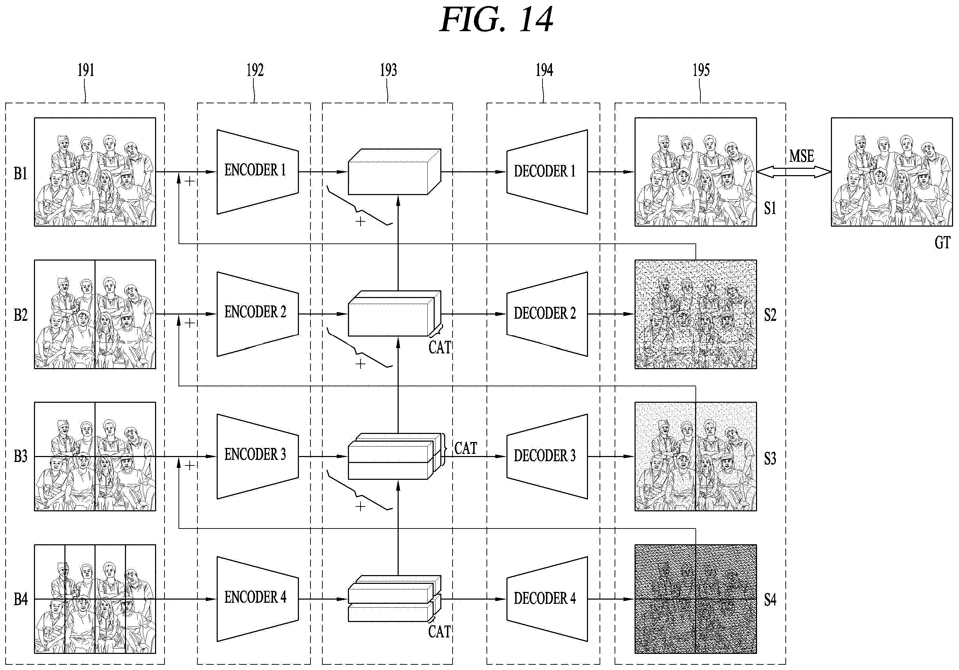

In association with this, FIG. 14 illustrates a configuration for acquiring an image resulting from decryption using the deep learning model in the electronic device according to the present disclosure that encrypts and decrypts an image. With reference to FIG. 7A and 14, the image processing unit 190 may be configured to include an input interface 191, a plurality of encoders 192, a deep learning module 193, a plurality of decoders 194, and an output interface 195.

The input interface 191 is configured in such a manner that a plurality of images B1 to B4 are input thereinto. The plurality of images B1 to B4 may be images that are configured in a blurred manner, Among the plurality of images, the first image B1 may be an undivided image, and the second image B2 may be a divided image that is configured with 2 image patches on a per-row basis. Among the plurality of images, the third image B3 may be a divided image that is configured with 4 image patches, arranged in two rows and two columns. Among the plurality of images, the fourth image B4 may be a divided image that is configured with 8 image patches, arranged in two rows and four columns.

The plurality of encoders 19 receive first to fourth images B1 to B4 through Encoders 1 to 4, respectively, and transfer the encoded images to the deep learning modules 193, respectively. Encoder 1 encodes the first image B1 with a residual map S2 at Level 2. Encoder 2 encodes the second image B2 with a residual map S3 at Level 3. Encoder 3 encodes the third image B3 with a residual map S4 at Level 4.

The plurality of decoders 194 may include Decoders 1 to 4. Decoder 1 may output through the output interface 195 an image S1 from the restoration, which is no longer in an encrypted state. The image S1 resulting from the restoration may be a final deblurred image at Level 1. Decoders 2 to 4 may output the residual maps S2 to S4 at Levels 2 to 4, respectively.

The deep learning module 193 may be configured to include first to fourth deep learning units. The first to fourth deep learning units may receive outputs from Encoders 1 to 4 and may transfer learned output results as inputs to Decoders 1 to 4, respectively. A parameter acquired in the fourth deep learning unit may be transferred to the third deep learning unit. A parameter acquired in the third deep learning unit may be transferred to the second deep learning unit. A parameter acquired in the second deep learning unit may be transferred to the first deep learning unit.

Errors among the images may be analyzed by comparing the image S1 resulting from the restoration and the original image. As an example, a mean square error (MSE) may be analyzed by comparing the image S1 from the restoration and a ground-truth sharp image GT.

Next, direct restoration to the original image is possible by performing deep learning on the encrypted image without applying the PSF Wiener filter. The encrypted image, which is captured through the camera module, and the original image are configured as learning data, thereby enabling deep learning. The second image 920b as in (a) FIG. 12B, which is an image resulting from the restoration by directly applying the trained deep learning model to the encrypted image, may be acquired. There occurs no meaningful difference between the technique in which the image resulting from the restoration is acquired by directly applying the trained deep learning model to the encrypted image and the technique in that the PSF Wiener image and the original image are configured as learning data and additional deep learning is performed. Therefore, the third image 920c, as in (b) of FIG. 12B, may also be acquired by directly restoring the encrypted image using the deep learning model without PSF information.

The electronic device 100 or 200 according to the present disclosure that encrypts or decrypts image information may acquire the encrypted image and/or the encryption key (or the decryption key) through the communication unit 110 or 210, respectively. The communication units 110 and 210 may be configured to receive the captured image, which is encrypted in an unidentifiable manner on the basis of the encryption key, from a transmission device.

In a case where the authority to access the encrypted image is retained, the processor 180 may perform restoration to the second image on the basis of the encryption key, in which the optical element 125 is arranged to an angle of 0 degrees, or the second encryption key, which depends on the rotational angle of the optical element 125. In addition, the processor 180 may perform decryption against the hardware-based encryption and then may perform decryption against the software-based encryption. In association with this, the processor 180 may restore the second image to the normal image by further performing restoration using software on the basis of a decryption code or a second decryption code. The decryption code corresponds to a software-based encryption code in a structure in which the optical element 125 is arranged to an angle of 0 degrees. The second decryption code corresponds to a software-based second encryption code in a structure in which the optical element 125 is rotationally moved by a predetermined angle.

With reference to FIGS. 1 to 14, the electronic device according to the present disclosure that encrypts image information is described below.

The electronic device 100 may be configured to include the camera module 120 and the optical element 124. The camera module 120 may include at least one lens from the lens 121 to 123. The optical element 125 may be coupled in a manner that is movable in the area in front of at least one lens from the lenses 121 to 123, so that an object within an image is encrypted in an unidentifiable manner. At this point, the structure that enables "movably coupled" may be a structure in which the optical element 125 is coupled in the area in front of at least one lens from the lenses 121 to 123 in a manner that is rotatable on a per-predetermined angle basis. In addition, the structure that enables "movably coupled" may be a structure in which the optical element 125 moves in the area in front of at least one lens from the lenses 121 to 123 along one axial direction, for example, the x-axis direction.

The camera module 120 according to the present disclosure may be configured to include the plurality of lenses 121 to 123, the image sensor 124, and the optical element 125. The image sensor 124 may be arranged to be separated from the first lens 121, which is positioned rearmost among the plurality of lenses 121 to 123. The image sensor 124 may be configured to convert an analog signal, associated with the image acquired through the plurality of lenses 121 to 123, into a digital signal.

The optical element 125 may be arranged in front of the second lens 123 arranged frontmost among the plurality of lenses 121 to 123. The optical element 125 may be arranged in the exposure area of the iris, which adjusts an image capture area in such a manner as to adjust the amount of light to be introduced into the plurality of lenses 121 to 123.

The electronic device according to the present disclosure that encrypts image information may encrypt an image in different techniques by rotating the optical element 125 arranged in the area in front of the lenses 121 to 123 or moving the optical element 125 along one axial direction. In association with this, the electronic device 100 may further include the actuator 130 that moves the optical element 125 relative to the lenses 121 and 123.

The actuator 130 rotationally moves the optical element 125 by a predetermined angle, thereby changing a format in which the image is encrypted. As an example, the actuator 130 may control the optical element 125 in such a manner as to encrypt the image, by rotationally moving the optical element 125 by 30 degrees or 45 degrees. The actuator 130 may control the optical element 125 in such a manner as to encrypt the image, by 15 degrees, 30 degrees, 45 degrees, 60 degrees, 90 degrees, or 120 degrees.

With reference to FIGS. 4, 10, and 11A, the actuator 130 may control the optical element 125 to be arranged into or out of the image capture area. Accordingly, the actuator 130 may arrange the optical element 125 into the image capture area, thereby enabling an image to be encrypted. In addition, the actuator 130 may move the optical element 125 out of the image capture area, thereby enabling an image to be captured without going through encryption.

One surface of the optical element 125 that faces the second lens 123, among the plurality of lenses 121 to 123, may be formed in the shape of a parabola along one axial direction and the other axial direction perpendicular to the one axial direction. In association with this, the optical element 125 may be formed in the shape of a parabola in such a manner that the height z thereof satisfies $z = \alpha x^3 + \beta y^3$, but is not limited to this shape. The optical element 125 may be formed in the shape of a parabola in such a manner that the height z thereof satisfies $z = \alpha x^{2n+1} + \beta y^{2n+1}$ where n may be an integer that is equal to or greater than 1, resulting in odd powers.

An image may be encrypted by being formed in such a manner that the distance between one surface of the optical element 125 and the second lens 123 is reduced from the first distance L1 at the first end of the image capture area to the second distance L2 at the second end thereof along one axial direction. The processor 180 of the electronic device 100 may control a format in which the image is encrypted, by controlling the actuator 130.

The distance between one surface of the optical element 125 and the second lens 123 may be formed to be changed, by the rotational movement, from the third distance L3 at the first end of the image capture area to the fourth distance L4 at the second end thereof along one axial direction. In association with this, the third distance L3 is different from the first distance L1, and the fourth distance L4 is different from the second distance L2.

An image may be encrypted in the encryption format that varies according to the rotational angle of the optical element 125. For example, when the optical element 125 is rotationally moved by 0 degrees, 90 degrees, or 180 degrees, an image may be encrypted in the first encryption format, the second encryption format, or the third encryption format, respectively. In association with this, in a case where the rotational angle of the optical element 125 is 0 degrees, an image may be encrypted in the first encryption format when the distance between one surface of the optical element 125 and the second lens 123 is reduced from the first distance L1 at the first end of the image capture area to the second distance L2 at the second end thereof along one axial direction.

In a case where through the actuator 130, the optical element 125 is rotationally moved by 90 degrees, the distance may be reduced from the first distance L1 at the first end of the image capture area to the second distance L2 at the second end thereof along the other axial direction perpendicular to one axial direction. Accordingly, in the case where the optical element 125 is rotationally moved by 90 degrees, an image may be encrypted in the second encryption format different from the first encryption format. In the case where the optical element 125 is rotationally moved by 180 degrees through the actuator 130, the distance may be increased from the second distance L2 at the second end of the image capture area to the first distance L1 at the first end thereof along one axial direction. Accordingly, in the case where the optical element 125 is rotationally moved by 180 degrees, an image may be encrypted in the third encryption format different from the first encryption format and the second encryption format.

The electronic device 100 that encrypts image information may further include the memory 170 in which the encryption key and/or the decryption key is stored. The processor 180 may decrypt the encrypted image using the encryption key (or the decryption key). The decryption key may be configured as a key corresponding to the encryption key. The memory 170 may be configured in such a manner that the encryption keys, formed as results of the rotational movements of the optical element 125 by predetermined angles, are stored therein. The encrypted image and the encryption keys may be stored in the memory 170 or a separate server 300.

The electronic device 100 according to the present disclosure that encrypts image information may decrypt the encrypted image on the basis of the encryption key (or the decryption key). The electronic device 100 may decrypt the encrypted image on the basis of the encryption key (or the decryption key) and may display the decrypted image on the display 151.

The second electronic device 200, which is another electronic device, may decrypt the encrypted image on the basis of the encryption key (or the decryption key) and may display the decrypted image on the display 251.

Processors 180 and 280 may determine whether or not the authority to access the encrypted image is retained. The authority to access the encrypted image may be the authority to access or the authority to view the image on the electronic device 100 or 200, depending on the type of application program. When the authority to access the encrypted image is determined to be retained, the processor 180 may acquire from the memory 170 the encryption key corresponding to the angle by which the optical element 125 is rotated. The processor 180 may decrypt the encrypted image on the basis of the acquired encryption key and may display the decrypted image on the display 170 in an identifiable manner.

The processor 180 may encrypt an image on the basis of the changed second encryption key and may decrypt the encrypted image. The processor 180 may encrypt an image using a different encryption key when the encryption key is determined to have been leaked by an external terminal or depending on the type of application. In association with this, the processor 180 may encrypt an image by rotationally moving the optical element 125 by a different angle when the encryption key is determined to have been leaked or depending on the type of application.

After the optical element 125 is rotationally moved by a different angle, the processor 180 may redetermine whether the authority to access the encrypted image is retained. When the authority to access the encrypted image is determined to be retained, the processor 180 may acquire from the memory 170 the second encryption key (or the second decryption key) corresponding to the different angle. The processor 180 may decrypt the encrypted image on the basis of the acquired second encryption key and may display the decrypted image on the display 170 in an identifiable manner.

According to another embodiment, the encryption formation may be changed by moving the optical element 125 along one axial direction or the other axial direction. In association with this, the processor 180 may control the format in which the image is encrypted, by controlling the actuator 130.

The processor 180 may control the format in which the image is encrypted, by moving the optical element 125 along the other axial direction through the actuator 130. The distance between one surface of the optical element 125 and the second lens 123 may be formed to be changed, by the rotational movement, from the fifth distance L5 at the first end of the image capture area to the sixth distance L6 at the second end thereof along the other axial direction. The fifth distance L5 may be different from the first distance L1, and the sixth distance L6 may be different from the second distance L2. In the structure where the center of the optical element 125 is the same as the center of the camera module 120, the distance between one surface of the optical element 125 and the second lens 123 is formed as the first distance L1 at the first end of the image capture area and the second distance L2 at the second end thereof.

The electronic device 100 according to the present disclosure that encrypts image information determines on the basis of the type of application program whether or not encryption is performed, and when encryption is necessary, moves the optical element 125 into the image capture area. In association with this, on the basis of the type of application program that is already executed or is being executed, the processor 180 may determine whether or not the image needs to be encrypted.

When the image is determined not to need to be encrypted, the processor 180 may move the optical element 125 out of the image capture area through the actuator 130. The processor 180 may perform control in such a manner that the image is not encrypted, by moving the optical element 125 out of the image capture area along the other axial direction. When the image is determined to need to be encrypted, the processor 180 may move the optical element 125 into the image capture area through the actuator 130. The processor 180 may perform control in such a manner that the image is encrypted, by moving the optical element 125 into the image capture area along the other axial direction.

The electronic device 100 according to the present disclosure that encrypts image information may improve the security through hardware-technique encryption that uses the optical element 125, and through software-technique encryption that uses a separate encryption key. In association with this, the processor 180 may further encrypt the image, which is encrypted by the optical element 125, using software on the basis of the encryption code. The processor 180 may further the image, which is encrypted by the optical element 125, using software on the basis of the encryption code that differs according to the rotational angle of the optical element 125. Therefore, even if the software-technique encryption code is leaked, the security can be improved using the encryption code that differs with the rotational angle of the optical element 125.

The electronic device 100 or 200 according to the present disclosure that encrypts or decrypts image information may acquire the encrypted image and/or the encryption key (or the decryption key) through the communication unit 110 or 210, respectively. The communication units 110 and 210 may be configured to receive the captured image, which is encrypted in an unidentifiable manner on the basis of the encryption key, from the transmission device.

In a case where the authority to access the encrypted image is retained, the processor 180 may perform restoration to the second image on the basis of the encryption key, in which the optical element 125 is arranged to an angle of 0 degrees, or the second encryption key, which depends on the rotational angle of the optical element 125. In addition, the processor 180 may perform decryption against the hardware-technique encryption and then may perform decryption against the software-technique encryption. In association with this, the processor 180 may restore the second image to the normal image by further performing restoration using software on the basis of the decryption code or the second decryption code. The decryption code corresponds to the software-technique encryption code in the structure in which the optical element 125 is arranged to an angle of 0 degrees. The second decryption code corresponds to the software-technique second encryption code in the structure in which the optical element 125 is rotationally moved by a predetermined angle.

The processor 180 of the electronic device 100 according to the present disclosure which encrypts and decrypts image information may restore the encrypted image in a deep learning technique through the image processing unit 190 and may output the image resulting from the restoration. The image processing unit 190 may be embodied separately from the processor 180 or may be configured to be included in the processor 180.

The image processing unit 190 may select the point spread function (PSF) image associated with the PSF that depends on the rotational angle of the optical element 125. The image processing unit 190 may restore the encrypted image on the basis of the encryption key corresponding to the orientation of the selected PSF image and may output the image resulting from the restoration.

The image processing unit 190 may acquire the image resulting from the restoration without applying the PSF filter. The image processing unit 190 may output the image resulting from the restoration, through deep learning that uses learning data configured as the encrypted image and the original image. The encrypted image is captured through the camera module 120 according to the rotational angle of the optical element 125.

The image processing unit 190 may include an input interface 191 configured to receive a plurality of blurred images B1 to B4. The image processing unit 190 may include the plurality of encoders 192 configured to receive the plurality of images B1 to B4 and output the encoded images. The image processing unit 190 may include the deep learning module 193 configured to include the plurality of deep learning units coupled to the plurality of encoders 192, respectively. The image processing unit 190 may include the plurality of decoders 194 coupled to the plurality of deep learning units, respectively. The image processing unit 190 may perform control in such a manner that the first image B1 not divided, among the plurality of images, is input into Encoder 1, among the plurality of encoders, and that the image resulting from the restoration is output through Decoder 1, among the plurality of decoders.

The second to fourth images B2 to B4, among the plurality of images, may be divided images. Encoder 1, among the plurality of encoders, may encode the first image B1 with a second residual image S2 that has a lower resolution than the image S1 resulting from the restoration. Encoder 2 into which the second image B2 is input may encode the second image B2 with a third residual image S3 that has a lower resolution than the second residual image S2. Encoder 3 into which the third image B3 is input may encode the third image B3 with a fourth residual image S4 that has a lower resolution than the third residual image S3. Through the encoder structure that features this hierarchical structure, the characteristics of an object area that are divided into images may be in detail reflected. Consequently, the image resulting from the restoration, with reduced errors at border areas, may be acquired.

The electronic device and the image transmission and reception system according to the present disclosure which transmit or receive the encrypted image are described above. Technical effects of the electronic device and the image transmission and reception system according to the present disclosure which transmit or receive the encrypted image are described as follows.

The method of encrypting the encrypted image in an unidentifiable manner according to the present disclosure and the electronic device and the image transmission and reception system that perform the method are described as follows.

According to the present disclosure, an image is blurred by switching on and thus adding an optical element, which is a new optical component, to a camera lens. As a result, even if utilized for deep learning and similar applications or if hacked, a personal image can remain unidentifiable.

According to the present disclosure, when a unique function of a camera, such as video chatting or remote monitoring, is needed, an image that has completely the same quality as an image captured by a general camera can be provided by switching off and thus removing the added optical element.

According to the present disclosure, when an image captured by an IoT camera, such as a smart home camera, is hacked or utilized as Big Data for artificial intelligence learning data and similar applications, the image, which is optically processed in an unidentifiable manner at the camera level and thus rendered unidentifiable, is output. Consequently, privacy can be protected fundamentally.

According to the present disclosure, a camera structure and a control method can be provided that are capable of effectively dealing with two situations. One situation is when a normal image is needed for video chatting, remote monitoring, or the like. The other situation is when an image processed in an unidentifiable manner is needed because artificial intelligence operates in a general situation.

According to the present disclosure, an image encryption method can be provided that uses hardware and/or software encryption techniques. This method is capable of dealing with an environment where hacking of IoT devices is also continuously increasing and, if necessary, performing the camera function of a general webcam as well.

According to the present disclosure, not only the risks, such as hacking, but also the causes of breaches of sensitive privacy, which may occur during a data transmission process or a storage process, can be fundamentally eliminated by performing a subsequent deep learning process using optical encryption and an encrypted image.

According to the present disclosure, because a mathematical encryption key for an optically encrypted image is provided, it is also possible that the optically encrypted image is output as an original image, resulting from decryption, in a reception device when necessary.

According to the present disclosure, not only the risks, such as hacking, but also the causes of breaches of sensitive privacy, which may occur during a data transmission process or a storage process, can be fundamentally eliminated by performing a subsequent deep learning process using optical encryption and an encrypted image.

According to the present disclosure, when performing a function such as video chatting or remote monitoring through a switching technique such as the movement or rotation of an encryption optical element, a captured image can be provided in real time with completely the same image quality as an image captured by a general camera, without the burden of additional computation.

Further scope of applicability of the present disclosure will become apparent from the foregoing detailed description

In relation to the aforementioned present disclosure, design and operations of a plurality of antennas of an antenna system mounted in a vehicle and a configuration performing the control of those antennas can be implemented as computer-readable codes in a program-recorded medium. The computer-readable media may include all kinds of recording apparatuses in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may include the controller of the terminal. The scope of the invention should be determined by reasonable interpretation of the appended claims.

**Claims**

1. An electronic device (100) that encrypts image information, the electronic device (100) comprising:

   a camera module (120) including a sensor (124) and a plurality of lenses (121, 122, 123) configured to capture an image;
   an actuator (130) configured to rotate on a per-predetermined angle basis relative to the plurality of lenses (121, 122, 123);
   an optical element (125) coupled in an area in front of the plurality of lenses (121 to 123) and configured to be rotationally moved by the actuator (130) in such a manner that an object within the image is encrypted in an unidentifiable manner;
   a processor (180) configured to control a format in which the image is encrypted, by enabling the actuator (130) to rotationally move the optical element (125) by a predetermined angle controlling the actuator (130); and
   a memory (170) configured to store encryption keys formed as results of the rotational movements of the optical element (125) by predetermined angles,
   wherein the processor (180) determines whether the authority to access the encrypted image is retained,
   wherein, when the authority is determined to be retained, the processor (180) acquires from the memory (170) an encryption key corresponding to an angle by which the optical element (125) is rotated for decrypting the encrypted image.

2. The electronic device (100) of claim 1, wherein the camera module (120) comprises:

   the plurality of lenses (121, 122, 123);
   an image sensor arranged to be separated from a first lens (121) arranged rearmost among the plurality of lenses (121, 122, 123), and configured to convert an analog signal, associated with the image acquired through the plurality of lenses (121, 122, 123), into a digital signal; and
   the optical element (125) arranged in front of a second lens (123) arranged frontmost among the plurality of lenses (121, 122, 123),
   wherein the optical element (125) is arranged in an exposure area of an iris adjusting an image capture area in such a manner as to adjust an amount of light to be introduced into the plurality of lenses (121, 122, 123).

3. The electronic device (100) of claim 2, further comprising:
   wherein the actuator (130) rotationally moves the optical element to be clockwise rotated or counter clockwise rotated by a predetermined angle, thereby changing a format in which the image is encrypted.

4. The electronic device (100) of claim 2, further comprising:

   wherein the actuator (130) arranges the optical element (125) into the image capture area, thereby encrypting the image, and wherein the actuator (130) moves the optical element (125) out of the image capture area, thereby enabling the image to be captured without going through encryption.

5. The electronic device of any one of claims 3 and 4, wherein one surface of the optical element (125) facing the second lens (123) is formed in the shape of a parabola along one axial direction corresponding to an X-axis, and the other axial direction corresponding to a Y-axis and perpendicular to the one axial direction, and wherein a distance between one surface of the optical element (125) and the second lens (123) is reduced from a first distance (L1) at a first end of the image capture area to a second distance (L2) at a second end thereof, thereby encrypting the image.

6. The electronic device (100) of claim 5, further comprising:

   wherein the distance between one surface of the optical element (125) and the second lens (122) is formed to be changed, by the rotational movement, from a third distance (L3) at the first end of the image capture area to a fourth distance (L4) at the second area thereof along the one axial direction, and wherein the third distance (L3) is different from the first distance (L1), and the fourth distance (L4) is different from the second distance (L2).

7. The electronic device (100) of claim 6, wherein, when the first distance (L1) at the first end of the image capture area is reduced to the second distance (L2) at the second end thereof, the image is encrypted in a first encryption format,

   wherein in a case where the optical element (125) is rotationally moved by 90 degrees by the actuator (130), the first distance (L1) at the first end of the image capture area is reduced to the second distance (L2) at the second end thereof along the other axial direction perpendicular to the one axial direction, thereby encrypting the image in a second encryption format, and wherein, in a case where the optical element (125) is rotationally moved by 180 degrees by the actuator (130), the second distance (L2) at the second end of the image capture area is increased to the first distance (L1) at the first end thereof along the one axial direction, thereby encrypting the image in a third encryption format.

8. The electronic device (100) of any one of claims 6 and 7, wherein the processor (180) decrypts the encrypted image on the basis of the acquired encryption key and displays the decrypted image on a display in an identifiable manner.

9. The electronic device (100) of claim 8, wherein, when the encryption key is determined to be leaked to the outside by an external terminal, or according to a type of an application, the processor (180) encrypts an image by rotationally moving the optical element by a different angle,

   wherein the processor (180) determines whether or not the authority to access the encrypted image is retained, and, when the authority is determined to be retained, acquires from the memory (180) a second encryption key corresponding to the different angle, and wherein the processor (180) decrypts the encrypted image on the basis of the acquired second encryption key and displays the decrypted image on a display in an identifiable manner.

10. The electronic device (100) of claim 5, further comprising:

    wherein the distance between one surface of the optical element (125) and the second lens (123) is formed to be changed by the movement along the other axial direction changes corresponding to the Y-axis, from a fifth distance (L5) at the first end of the image capture area to a sixth distance (L6) at the second end thereof along the other axial direction, and wherein the fifth distance (L5) is different from the first distance (L1), and the sixth distance (L6) is different from the second distance (L2).

11. The electronic device (100) of claim 10, wherein the processor (180) determines whether or not the image needs to be encrypted, on the basis of a type of application program that is already executed or is being executed, and wherein, when the image is determined not to need to be encrypted, the processor (180) controls the actuator (130) to move the optical element out of the image capture area along the other axial direction, in such a manner that the image is not encrypted.

**12.** The electronic device (100) of claim 11, further comprising:

a communication unit (110) configured to receive from a transmission device an image that results from encrypting a captured image in an unidentifiable manner on the basis of an encryption key,
wherein, in a case where the authority to access the encrypted image is retained, the processor (180) restores the encrypted image to a second image on the basis of the encryption key in which the optical element is arranged to an angle of 0 degree or a second encryption key in which optical element is rotationally moved by a predetermined angle, and further restores the second image to a normal image using software on the basis of a decryption code in which the optical element is arranged to an angle of 0 degree or a second decryption code in which optical element is rotationally moved by the predetermined angle.

**13.** The electronic device (100) of any one of claims 10 to 12, wherein the processor (180) further comprises:

an image processing unit (190) configured to restore the encrypted image in a deep learning technique and to output an image resulting from the restoration,
wherein the image processing unit (190) selects a point spread function (PSF) image associated with a PSF that depends on the rotational angle of the optical element, restores the encrypted image on the basis of an encryption key corresponding to an orientation of the selected PSF image, and outputs the image resulting from the restoration, and wherein the image processing unit (190) outputs the image resulting from the restoration, through deep learning that uses learning data configured as the encrypted image and an original image, the encrypted image being captured through the camera module (120) according to the rotational angle of the optical element (125).

**14.** The electronic device (100) of claim 13, wherein the image processing unit (190) comprises:

an input interface (191) configured to receive a plurality of blurred images (B1 to B4);
a plurality of encoders (192) configured to receive the plurality of blurred images (B1 to B4) and to output encoded images;
a deep learning module (193) configured to include a plurality of deep learning units coupled to the plurality of encoders (192), respectively; and
a plurality of decoders (194) coupled to the plurality of deep learning units (193), respectively,
wherein the image processing unit (190) performs control in such a manner that a first image (B1), not divided, among the plurality of blurred images (B1 to B4), is input into a first encoder, among the plurality of encoders (192), and that the image resulting from the restoration is output through a first decoder, among the plurality of decoders (194).

**15.** The electronic device (100) of claim 14, wherein second to fourth images (B2 to B4), among the plurality of blurred images (B1 to B4), are divided images, and
wherein the first encoder, among the plurality of encoders (192), encodes the first image (B1) with a second residual image (S2) having a lower resolution than the image (S1)_resulting from the restoration, the second encoder into which the second image (B2) is input encodes the second image (B2) with a third residual image (S3) having a lower resolution than the second residual image (S2), and the third encoder into which the third image (B3) is input encodes the third image (B3) with a fourth residual image (S4) having a lower resolution than the third residual image (S3).

**Patentansprüche**

**1.** Elektronische Vorrichtung (100), die Bildinformationen verschlüsselt, wobei die elektronische Vorrichtung (100) Folgendes umfasst:

ein Kameramodul (120), das einen Sensor (124) und eine Mehrzahl von Linsen (121, 122, 123) enthält, die dazu eingerichtet sind, ein Bild aufzunehmen;
einen Aktuator (130), der dazu eingerichtet ist, sich basierend auf einem vorbestimmten Winkel relativ zu der Mehrzahl von Linsen (121, 122, 123) zu drehen;
ein optisches Element (125), das in einem Bereich vor der Mehrzahl von Linsen (121 bis 123) gekoppelt ist und dazu eingerichtet ist, durch den Aktuator (130) derart drehbewegt zu werden, dass ein Objekt innerhalb des Bildes in einer nicht identifizierbaren Weise verschlüsselt wird;
einen Prozessor (180), der dazu eingerichtet ist, ein Format zu steuern, in dem das Bild verschlüsselt wird, indem er den Aktuator (130) befähigt, das optische Element (125) durch Steuerung des Aktuators (130) um einen vorbestimmten Winkel drehzubewegen; und
einen Speicher (170), der dazu eingerichtet ist, Verschlüsselungsschlüssel zu speichern, die als Ergebnisse der Drehbewegungen des optischen Elements (125) um vorbestimmte Winkel gebildet werden,

wobei der Prozessor (180) bestimmt, ob die Berechtigung zum Zugriff auf das verschlüsselte Bild behalten wird,

wobei, wenn bestimmt wird, dass die Berechtigung behalten wird, der Prozessor (180) aus dem Speicher (170) einen Verschlüsselungsschlüssel erhält, der einem Winkel entspricht, um den das optische Element (125) zum Entschlüsseln des verschlüsselten Bilds gedreht wird.

2. Elektronische Vorrichtung (100) nach Anspruch 1, wobei das Kameramodul (120) Folgendes umfasst:

die Mehrzahl von Linsen (121, 122, 123);
einen Bildsensor, der so angeordnet ist, dass er von einer ersten Linse (121) getrennt ist, die als hinterste unter der Mehrzahl von Linsen (121, 122, 123) angeordnet ist, und der dazu eingerichtet ist, ein analoges Signal, das dem durch die Mehrzahl von Linsen (121, 122, 123) erfassten Bild zugeordnet ist, in ein digitales Signal umzuwandeln; und
das optische Element (125), das vor einer zweiten Linse (123) angeordnet ist, die als vorderste unter der Mehrzahl von Linsen (121, 122, 123) angeordnet ist,
wobei das optische Element (125) in einem Belichtungsbereich einer Iris angeordnet ist, die einen Bildaufnahmebereich derart anpasst, dass eine Lichtmenge angepasst wird, die in die Mehrzahl von Linsen (121, 122, 123) eingeleitet werden soll.

3. Elektronische Vorrichtung (100) nach Anspruch 2, ferner umfassend:
wobei der Aktuator (130) das optische Element drehbewegt, um im Uhrzeigersinn oder gegen den Uhrzeigersinn um einen vorbestimmten Winkel gedreht zu werden, wodurch ein Format geändert wird, in dem das Bild verschlüsselt wird.

4. Elektronische Vorrichtung (100) nach Anspruch 2, ferner umfassend:

wobei der Aktuator (130) das optische Element (125) in den Bildaufnahmebereich positioniert, wodurch das Bild verschlüsselt wird, und
wobei der Aktuator (130) das optische Element (125) aus dem Bildaufnahmebereich herausbewegt, wodurch ermöglicht wird, dass das Bild aufgenommen wird, ohne eine Verschlüsselung zu durchlaufen.

5. Elektronische Vorrichtung nach einem der Ansprüche 3 und 4, wobei eine Oberfläche des optischen Elements (125), die der zweiten Linse (123) zugewandt ist, in der Form einer Parabel entlang einer axialen Richtung, die einer X-Achse entspricht, und der anderen axialen Richtung, die einer Y-Achse entspricht und senkrecht zu der einen axialen Richtung ist, ausgebildet ist, und
wobei ein Abstand zwischen einer Oberfläche des optischen Elements (125) und der zweiten Linse (123) von einem ersten Abstand (L1) an einem ersten Ende des Bildaufnahmebereichs zu einem zweiten Abstand (L2) an einem zweiten Ende davon verringert wird, wodurch das Bild verschlüsselt wird.

6. Elektronische Vorrichtung (100) nach Anspruch 5, ferner umfassend:

wobei der Abstand zwischen einer Oberfläche des optischen Elements (125) und der zweiten Linse (123) ausgebildet ist, um durch die Drehbewegung von einem dritten Abstand (L3) am ersten Ende des Bildaufnahmebereichs zu einem vierten Abstand (L4) am zweiten Ende davon entlang der einen axialen Richtung geändert zu werden, und
wobei der dritte Abstand (L3) verschieden vom ersten Abstand (L1) ist und der vierte Abstand (L4) verschieden vom zweiten Abstand (L2) ist.

7. Elektronische Vorrichtung (100) nach Anspruch 6, wobei, wenn der erste Abstand (L1) am ersten Ende des Bildaufnahmebereichs auf den zweiten Abstand (L2) am zweiten Ende davon verringert wird, das Bild in einem ersten Verschlüsselungsformat verschlüsselt wird,

wobei in einem Fall, in dem das optische Element (125) durch den Aktuator (130) um 90 Grad drehbewegt wird, der erste Abstand (L1) am ersten Ende des Bildaufnahmebereichs auf den zweiten Abstand (L2) am zweiten Ende davon entlang der anderen axialen Richtung senkrecht zu der einen axialen Richtung verringert wird, wodurch das Bild in einem zweiten Verschlüsselungsformat verschlüsselt wird, und
wobei in einem Fall, in dem das optische Element (125) durch den Aktuator (130) um 180 Grad drehbewegt wird, der zweite Abstand (L2) am zweiten Ende des Bildaufnahmebereichs auf den ersten Abstand (L1) am ersten Ende davon entlang der einen axialen Richtung vergrößert wird, wodurch das Bild in einem dritten Verschlüsselungsformat verschlüsselt wird.

8. Elektronische Vorrichtung (100) nach einem der Ansprüche 6 und 7,
wobei der Prozessor (180) das verschlüsselte Bild auf der Basis des erhaltenen Verschlüsselungsschlüssels entschlüsselt und das entschlüsselte Bild auf einer Anzeige in einer identifizierbaren Weise anzeigt.

9. Elektronische Vorrichtung (100) nach Anspruch 8, wobei, wenn bestimmt wird, dass der Verschlüsselungsschlüssel durch ein externes Endgerät oder gemäß einem Typ einer Anwendung nach außen durchgesickert ist, der Prozessor (180) ein Bild durch Drehbewegen des optischen Elements um einen anderen Winkel verschlüsselt,

   wobei der Prozessor (180) bestimmt, ob die Berechtigung zum Zugriff auf das verschlüsselte Bild behalten wird oder nicht, und, wenn bestimmt wird, dass die Berechtigung behalten wird, aus dem Speicher (170) einen zweiten Verschlüsselungsschlüssel erhält, der dem anderen Winkel entspricht, und
   wobei der Prozessor (180) das verschlüsselte Bild auf der Basis des erhaltenen zweiten Verschlüsselungsschlüssels entschlüsselt und das entschlüsselte Bild auf einer Anzeige in einer identifizierbaren Weise anzeigt.

10. Elektronische Vorrichtung (100) nach Anspruch 5, ferner umfassend:

    wobei der Abstand zwischen einer Oberfläche des optischen Elements (125) und der zweiten Linse (123) ausgebildet ist, um durch die Bewegung entlang der anderen axialen Richtung, die der Y-Achse entspricht, von einem fünften Abstand (L5) am ersten Ende des Bildaufnahmebereichs zu einem sechsten Abstand (L6) am zweiten Ende davon entlang der anderen axialen Richtung geändert zu werden, und
    wobei der fünfte Abstand (L5) verschieden vom ersten Abstand (L1) ist und der sechste Abstand (L6) verschieden vom zweiten Abstand (L2) ist.

11. Elektronische Vorrichtung (100) nach Anspruch 10, wobei der Prozessor (180) auf der Basis eines Typs eines Anwendungsprogramms, das bereits ausgeführt ist oder ausgeführt wird, bestimmt, ob das Bild verschlüsselt werden muss oder nicht, und wobei, wenn bestimmt wird, dass das Bild nicht verschlüsselt werden muss, der Prozessor (180) den Aktuator (130) steuert, um das optische Element entlang der anderen axialen Richtung derart aus dem Bildaufnahmebereich herauszubewegen, dass das Bild nicht verschlüsselt wird.

12. Elektronische Vorrichtung (100) nach Anspruch 11, ferner umfassend:

    eine Kommunikationseinheit (110), die dazu eingerichtet ist, von einer Übertragungsvorrichtung ein Bild zu empfangen, das aus der Verschlüsselung eines aufgenommenen Bildes in einer nicht identifizierbaren Weise auf der Basis eines Verschlüsselungsschlüssels resultiert, wobei in einem Fall, in dem die Berechtigung zum Zugriff auf das verschlüsselte Bild behalten wird, der Prozessor (180) das verschlüsselte Bild in ein zweites Bild auf der Basis des Verschlüsselungsschlüssels, bei dem das optische Element in einem Winkel von 0 Grad angeordnet ist, oder eines zweiten Verschlüsselungsschlüssels wiederherstellt, bei dem das optische Element um einen vorbestimmten Winkel drehbewegt ist, und ferner das zweite Bild unter Verwendung von Software in ein normales Bild auf der Basis eines Entschlüsselungscodes, bei dem das optische Element in einem Winkel von 0 Grad angeordnet ist, oder eines zweiten Entschlüsselungscodes wiederherstellt, bei dem das optische Element um den vorbestimmten Winkel drehbewegt ist.

13. Elektronische Vorrichtung (100) nach einem der Ansprüche 10 bis 12, wobei der Prozessor (180) ferner Folgendes umfasst:

    eine Bildverarbeitungseinheit (190), die dazu eingerichtet ist, das verschlüsselte Bild in einer Technik zum tiefen Lernen wiederherzustellen und ein aus der Wiederherstellung resultierendes Bild auszugeben,
    wobei die Bildverarbeitungseinheit (190) ein Punktspreizfunktions-, PSF-, Bild auswählt, das einer PSF zugeordnet ist, die von dem Drehwinkel des optischen Elements abhängt, das verschlüsselte Bild auf der Basis eines Verschlüsselungsschlüssels wiederherstellt, der einer Ausrichtung des ausgewählten PSF-Bildes entspricht, und das aus der Wiederherstellung resultierende Bild ausgibt, und wobei die Bildverarbeitungseinheit (190) das aus der Wiederherstellung resultierende Bild durch tiefes Lernen ausgibt, das Lerndaten verwendet, die als das verschlüsselte Bild und ein Originalbild eingerichtet sind, wobei das verschlüsselte Bild durch das Kameramodul (120) gemäß dem Drehwinkel des optischen Elements (125) aufgenommen wird.

14. Elektronische Vorrichtung (100) nach Anspruch 13, wobei die Bildverarbeitungseinheit (190) Folgendes umfasst:

    eine Eingabeschnittstelle (191), die dazu eingerichtet ist, eine Mehrzahl von unscharfen Bildern (B1 bis B4) zu empfangen;
    eine Mehrzahl von Codierern (192), die dazu eingerichtet sind, die Mehrzahl von unscharfen Bildern (B1 bis B4) zu empfangen und codierte Bilder auszugeben;

ein Modul zum tiefen Lernen (193), das dazu eingerichtet ist, eine Mehrzahl von Einheiten zum tiefen Lernen zu enthalten, die jeweils mit der Mehrzahl von Codierern (192) gekoppelt sind; und

eine Mehrzahl von Decodierern (194), die jeweils mit der Mehrzahl von Einheiten zum tiefen Lernen (193) gekoppelt sind,

wobei die Bildverarbeitungseinheit (190) eine Steuerung derart durchführt, dass ein erstes Bild (B1), das nicht unterteilt ist, aus der Mehrzahl von unscharfen Bildern (B1 bis B4) in einen ersten Codierer aus der Mehrzahl von Codierern (192) eingegeben wird, und dass das aus der Wiederherstellung resultierende Bild durch einen ersten Decodierer aus der Mehrzahl von Decodierern (194) ausgegeben wird.

**15.** Elektronische Vorrichtung (100) nach Anspruch 14, wobei zweite bis vierte Bilder (B2 bis B4) aus der Mehrzahl von unscharfen Bildern (B1 bis B4) unterteilte Bilder sind, und

wobei der erste Codierer aus der Mehrzahl von Codierern (192) das erste Bild (B1) mit einem zweiten Residualbild (S2) codiert, das eine geringere Auflösung aufweist als das aus der Wiederherstellung resultierende Bild (S1), der zweite Codierer, in den das zweite Bild (B2) eingegeben wird, das zweite Bild (B2) mit einem dritten Residualbild (S3) codiert, das eine geringere Auflösung aufweist als das zweite Residualbild (S2), und der dritte Codierer, in den das dritte Bild (B3) eingegeben wird, das dritte Bild (B3) mit einem vierten Residualbild (S4) codiert, das eine geringere Auflösung aufweist als das dritte Residualbild (S3).

**Revendications**

**1.** Dispositif électronique (100) qui chiffre des informations d'image, le dispositif électronique (100) comprenant:

un module caméra (120) comprenant un capteur (124) et une pluralité de lentilles (121, 122, 123) configurés pour capturer une image;
un actionneur (130) conçu pour tourner selon un angle prédéterminé par rapport à la pluralité de lentilles (121, 122, 123);
un élément optique (125) accouplé dans une zone située devant la pluralité de lentilles (121 à 123) et configuré pour être déplacé en rotation par l'actionneur (130) de telle manière qu'un objet dans l'image soit chiffré de manière non identifiable;
un processeur (180) configuré pour régler le format dans lequel l'image est chiffrée, en permettant à l'actionneur (130) de déplacer en rotation l'élément optique (125) selon un angle prédéterminé commandant l'actionneur (130); et
une mémoire (170) configurée pour stocker les clés de chiffrement formées à partir des mouvements de rotation de l'élément optique (125) selon des angles prédéterminés,
dans lequel le processeur (180) détermine si l'autorisation d'accéder à l'image chiffrée est conservée,
dans lequel, lorsque l'autorité est déterminée comme devant être conservée, le processeur (180) acquiert à partir de la mémoire (170) une clé de chiffrement correspondant à un angle selon lequel l'élément optique (125) est tourné pour déchiffrer l'image chiffrée.

**2.** Dispositif électronique (100) selon la revendication 1, dans lequel le module caméra (120) comprend:

la pluralité de lentilles (121, 122, 123);
un capteur d'image agencé de manière à être séparé d'une première lentille (121) agencée le plus en arrière parmi la pluralité de lentilles (121, 122, 123), et configuré pour convertir un signal analogique, associé à l'image acquise par la pluralité de lentilles (121, 122, 123), en un signal numérique; et
l'élément optique (125) disposé devant une deuxième lentille (123) disposée le plus en avant parmi la pluralité de lentilles (121, 122, 123),
dans lequel l'élément optique (125) est agencé dans une zone d'exposition d'un diaphragme ajustant une zone de capture d'image de manière à ajuster la quantité de lumière à introduire dans la pluralité de lentilles (121, 122, 123).

**3.** Dispositif électronique (100) selon la revendication 2, comprenant en outre:
dans lequel l'actionneur (130) fait tourner l'élément optique dans le sens horaire ou antihoraire selon un angle prédéterminé, modifiant ainsi le format dans lequel l'image est chiffrée.

**4.** Dispositif électronique (100) selon la revendication 2, comprenant en outre:

dans lequel l'actionneur (130) positionne l'élément optique (125) dans la zone de capture d'image, chiffrant ainsi l'image, et
dans lequel l'actionneur (130) déplace l'élément optique (125) en dehors de la zone de capture d'image, permettant ainsi à l'image d'être capturée sans passer par le chiffrement.

**5.** Dispositif électronique selon l'une quelconque des revendications 3 et 4, dans lequel une surface de l'élément optique (125) faisant face à la deuxième lentille (123) se présente sous une forme parabolique le long d'une direction axiale correspondant à un axe X, et l'autre direction axiale correspondant à un axe Y et perpendiculaire à la première direction axiale, et

dans lequel la distance entre une surface de l'élément optique (125) et la deuxième lentille (123) est réduite d'une première distance (L1) à une première extrémité de la zone de capture d'image à une deuxième distance (L2) à une deuxième extrémité de celle-ci, chiffrant ainsi l'image.

6. Dispositif électronique (100) selon la revendication 5, comprenant en outre:

dans lequel la distance entre une surface de l'élément optique (125) et la deuxième lentille (122) est formée de manière à être modifiée, par le mouvement de rotation, d'une troisième distance (L3) à la première extrémité de la zone de capture d'image à une quatrième distance (L4) dans la deuxième zone de celle-ci le long d'une direction axiale, et

dans lequel la troisième distance (L3) est différente de la première distance (L1), et la quatrième distance (L4) est différente de la deuxième distance (L2).

7. Dispositif électronique (100) selon la revendication 6, dans lequel la première distance (L1) à la première extrémité de la zone de capture d'image est réduite à la deuxième distance (L2) à la deuxième extrémité de celle-ci, l'image est chiffrée dans un premier format de chiffrement,

dans lequel, dans le cas où l'élément optique (125) serait déplacé en rotation de 90 degrés par l'actionneur (130), la première distance (L1) à la première extrémité de la zone de capture d'image est réduite à la deuxième distance (L2) à la deuxième extrémité de celle-ci le long de l'autre direction axiale perpendiculaire à la première direction axiale, chiffrant ainsi l'image dans un deuxième format de chiffrement, et

dans lequel, dans le cas où l'élément optique (125) serait déplacé en rotation de 180 degrés par l'actionneur (130), la deuxième distance (L2) à la deuxième extrémité de la zone de capture d'image est augmentée jusqu'à la première distance (L1) à la première extrémité de celle-ci le long d'une direction axiale, chiffrant ainsi l'image dans un troisième format de chiffrement.

8. Dispositif électronique (100) selon l'une quelconque des revendication 6 à 7, dans lequel:
dans lequel le processeur (180) déchiffre l'image chiffrée sur la base de la clé de chiffrement acquise et affiche l'image déchiffrée sur un écran de manière identifiable.

9. Dispositif électronique (100) selon la revendication 8, dans lequel, lorsque la clé de chiffrement est déterminée comme ayant été divulguée à l'extérieur par un terminal externe, ou selon un type d'application, le processeur (180) chiffre une image en tournant l'élément optique selon un angle différent,

dans lequel le processeur (180) détermine si l'autorisation d'accéder à l'image chiffrée est conservée ou non, et, lorsque l'autorisation est déterminée comme étant conservée, acquiert à partir de la mémoire (180) une deuxième clé de chiffrement correspondant à l'angle différent, et

dans lequel le processeur (180) déchiffre l'image chiffrée sur la base de la deuxième clé de chiffrement acquise et affiche l'image déchiffrée sur un écran de manière identifiable.

10. Dispositif électronique (100) selon la revendication 5, comprenant en outre:

dans lequel la distance entre une surface de l'élément optique (125) et la deuxième lentille (123) est formée de manière à être modifiée, par le mouvement le long de l'autre direction axiale correspondant à l'axe Y, d'une cinquième distance (L5) à la première extrémité de la zone de capture d'image à une sixième distance (L6) à la deuxième extrémité de celle-ci le long de l'autre direction axiale, et

dans lequel la troisième distance (L5) est différente de la première distance (L1), et la sixième distance (L6) est différente de la deuxième distance (L2).

11. Dispositif électronique (100) selon la revendication 10, dans lequel le processeur (180) détermine si l'image doit être chiffrée ou non, sur la base d'un type de programme d'application qui est déjà exécuté ou en cours d'exécution, et

dans lequel, lorsqu'il est déterminé que l'image n'a pas besoin d'être chiffrée, le processeur (180) amène l'actionneur (130) à déplacer l'élément optique en dehors de la zone de capture d'image le long de l'autre direction axiale, de telle manière que l'image ne soit pas chiffrée.

12. Dispositif électronique (100) selon la revendication 11, comprenant en outre:

une unité de communication (110) configurée pour recevoir en provenance d'un dispositif de transmission une image obtenue par chiffrement d'une image capturée de manière non identifiable sur la base d'une clé de chiffrement, dans lequel, dans le cas où l'autorisation d'accéder à l'image chiffrée est conservée, le processeur (180) restaure l'image chiffrée en une deuxième image sur la base de la clé de chiffrement dans laquelle l'élément optique est disposé à un angle de 0 degré ou d'une deuxième clé de chiffrement dans laquelle l'élément optique est tourné selon un angle prédéterminé, et restaure en outre la deuxième image en une image normale à l'aide d'un logiciel sur la base d'un code de déchiffrement dans lequel l'élément optique est disposé à un angle de 0 degré ou d'un deuxième code de déchiffrement dans lequel l'élément optique est tourné selon l'angle prédéterminé.

13. Dispositif électronique selon l'une quelconque des revendications 10 à 12, dans lequel le processeur (180) comprend:

une unité de traitement d'image (190) configurée pour restaurer l'image chiffrée à l'aide d'une technique d'apprentissage profond et pour produire une image obtenue par restauration, dans lequel l'unité de traitement d'image (190) sélectionne une image de fonction d'étalement de point (PSF) associée à une PSF qui dépend de l'angle de rotation de l'élément optique, restaure l'image chiffrée sur la base d'une clé de chiffrement correspondant à une orientation de l'image PSF sélectionnée, et délivre l'image obtenue par restauration, et dans lequel l'unité de traitement d'image (190) délivre l'image obtenue par restauration, par le biais d'un apprentissage profond qui utilise des données d'apprentissage configurées comme l'image chiffrée et une image originale, l'image chiffrée étant capturée par le module caméra (120) en fonction de l'angle de rotation de l'élément optique (125).

14. Dispositif électronique (100) selon la revendication 13, dans lequel l'unité de traitement d'image (190) comprend:

une interface d'entrée (191) configurée pour recevoir une pluralité d'images floues (B1 à B4); une pluralité de codeurs (192) configurés pour recevoir la pluralité d'images floues (B1 à B4) et pour délivrer des images codées; un module d'apprentissage profond (193) configuré pour inclure une pluralité d'unités d'apprentissage profond couplées respectivement à la pluralité de codeurs (192); et une pluralité de décodeurs (194) couplés respectivement à la pluralité d'unités d'apprentissage profond (193),
dans lequel l'unité de traitement d'image (190) procède de telle manière qu'une première image (B1), non divisée, parmi la pluralité d'images floues (B1 à B4), soit entrée dans un premier codeur, parmi la pluralité de codeurs (192), et que l'image obtenue par restauration soit délivrée par un premier décodeur, parmi la pluralité de décodeurs (194).

15. Dispositif électronique (100) selon la revendication 14, dans lequel les deuxième à quatrième images (B2 à B4), parmi la pluralité d'images floues (B1 à B4), sont des images divisées, et

dans lequel le premier codeur, parmi la pluralité de codeurs (192), code la première image (B1) avec une deuxième image résiduelle (S2) dont la résolution est inférieure à celle de l'image (S1) résultant de la restauration, le deuxième codeur dans lequel la deuxième image (B2) est entrée code la deuxième image (B2) avec une troisième image résiduelle (S3) dont la résolution est inférieure à celle de la deuxième image résiduelle (S2), et le troisième codeur dans lequel la troisième image (B3) est entrée code la troisième image (B3) avec une quatrième image résiduelle (S4) dont la résolution est inférieure à celle de la troisième image résiduelle (S3).

# FIG. 1

100

120

180

CAMERA MODULE

IMAGE ENCRYPTION BASED ON OPTICAL LENS OF CAMERA MODULE

ENCRYPTED IMAGE (DEFAULT)

300

STORING IN CLOUD, PERFORMING AI FUNCTION

ONLY WHEN NECESSARY, COMPLETE RESTORATION TO GENERAL IMAGE IS ACHIEVED BY DECRYPTING ENCRYPTED IMAGE USING SOFTWARE

280

200

NORMAL IMAGE

# *FIG. 2*

# FIG. 3

ACTUATOR

APERTURE
STOP POSITION

DECRYPTING ENCRYPTED
IMAGE USING ENCRYPTED
KEY

ENCRYPTED IMAGE

ORIGINAL IMAGE

# FIG. 4

ENCRYPT IMAGE (CONVOLUTION)

180

PSF
IN FIG. 6B

120

PRIVACY CAMERA

125    IMAGE
PLANE

121    122    123

ORIGINAL IMAGE

ENCRYPTED IMAGE

280

DECRYPT IMAGE (DECONVOLUTION)

# FIG. 5A

125  520  510  120

<NORMAL CAMERA MODE>

520  125  510

<AI FUNCTION MODE>
(HACKING PREVENTION)

NORMAL IMAGE

ENCRYPTED IMAGE

CONFERENCE MEETING
REMOTE MONITORING

AI FUNCTION/STORE
AT CLOUD

# FIG. 5B

125  520  510  120                              520                                    510

<NORMAL CAMERA MODE>            ⟺            <HACKING PREVENTION MODE>

NORMAL IMAGE                                    NO IMAGE

CONFERENCE MEETING              AI FUNCTION/STORE
REMOTE MONITORING                   AT CLOUD

# FIG. 6A

125

Z

Y X

(a)

125-R1  125

125-R2

Y

X

0.060
0.045
0.030
0.015
0.000
-0.015
-0.030
-0.045
-0.060

(b)

## FIG. 6B

(a)

(b)

# FIG. 7A

120

130

182

190

125

MOTOR

CONTROLLER

IMAGE
PROCESSING
UNIT

183

DETECTOR
(ENCODER)

# FIG. 7B

700a

(a)

700b

(b)

700c

(c)

700d

(d)

700e

(e)

# FIG. 8A

START — S

OPTICAL DESIGN — S100

PSF COMPUTATION — S200

MTF COMPUTATION — S300

S400
EXTENT OF ENCRYPTION > THRESHSHOLD LEVEL
NO
YES

ENCRYPTED-IMAGE TRANSMISSION CONTROL — S500

END — E

## FIG. 8B

START — S

ENCRYPTED IMAGE    PSF (ENCRYPTION KEY) — S100b

FOURIER TRANSFORM — S200b

PERFORMING DECONVOLUTION COMPUTATION IN FREQUENCY DOMAIN — S300b

PERFORMING INVERSE FOURIER TRANSFORM — S400b

DISPLAYING NORAM IMAGE — S500b

END — E

## FIG. 9A

MODULATION

SPATIAL FREQUENCY (CYCLES/MM)

## FIG. 9B

CONTRAST

MODULATION

SPATIAL FREQUENCY (CYCLES/MM)

SPATIAL RESOLUTION

# FIG. 10A

125    123

(a)

125    123

(c)

125    123

(e)

125    123
L1
L2

(b)

125    123
L3
L4

(d)

125    123
L2
L1

(f)

# FIG. 10B

(a)

(c)

(b)

(d)

# *FIG. 11*

(a)

(b)

# FIG. 12

OPTICAL ENCRYPTION

PSF (700)

ENCRYPTED IMAGE (910)

$$y = h * x$$
$$\longrightarrow FFT : Y = HX$$

$$X = \left(\frac{1}{H}\right)Y$$
$$\longrightarrow FFT : x$$

RESTORED IMAGE (920)

$$y = h * x + n$$
$$G = \frac{H^*}{H^2 + N}$$
$$\hat{X} = GY \longrightarrow FFT : \hat{x}$$

2nd RESTORED IMAGE (930)

EP 4 485 064 B1

# FIG. 13A

(a)

(b)

# FIG. 13B

(a)

(b)

FIG. 14

EP 4 485 064 B1

**REFERENCES CITED IN THE DESCRIPTION**

**Patent documents cited in the description**

- US 2010053350 A1

- CN 111738897 A